# EUROPÄISCHE PATENTSCHRIFT

(11) **EP 3 197 928 B1**
(45) Veröffentlichungstag und Bekanntmachung des Hinweises auf die Patenterteilung: **29.08.2018**
(21) Anmeldenummer: 15742321.1
(22) Anmeldetag: 31.07.2015
(51) Int. Cl.: C08G 18/72, C09D 5/00, C08G 18/75, C08G 18/79, C08G 18/80, C09D 175/04, C08G 18/62

(54) **HAFTVERMITTLER FÜR ZUR HERSTELLUNG VON FÜLLERSCHICHTEN GEEIGNETER BESCHICHTUNGSZUSAMMENSETZUNGEN**
ADHESIVE FOR COATING COMPOSITIONS SUITABLE FOR THE PRODUCTION OF FILLER LAYERS
AGENT ADHÉSIF POUR DES COMPOSITIONS DE REVÊTEMENTS ADAPTÉES À LA FABRICATION DE COUCHES DE REMPLISSAGE

(30) Priorität: 24.09.2014 EP 14186226
(43) Veröffentlichungstag der Anmeldung: 02.08.2017
(73) Patentinhaber: BASF Coatings GmbH, 48165 Münster (DE)
(72) Erfinder: ANDERSEN, Audree, 48329 Havixbeck (DE); NIEMEIER, Manuela, 48317 Drensteinfurt (DE); HESENER, Simone, 48163 Münster (DE)
(74) Vertreter: BASF IP Association
(86) Internationale Anmeldenummer: PCT/EP2015/067666
(87) Internationale Veröffentlichungsnummer: WO 2016/045839

(56) Entgegenhaltungen:
- US-A1- 2014 065 313

## Beschreibung

Die vorliegende Erfindung betrifft eine als Härter und als Haftvermittler einsetzbare Mischung (M) enthaltend wenigstens zwei voneinander verschiedene, jeweils unabhängig voneinander freie und/oder blockierte Isocyanat-Gruppen aufweisende Komponenten (M1) und (M2) sowie gegebenenfalls eine weitere von (M1) und (M2) verschiedene Komponente (M3), wobei (M1) wenigstens ein aliphatisches Polyisocyanat und (M2) wenigstens ein aliphatisches, Polyether-Einheiten aufweisendes Polyisocyanat umfasst, wobei das relative Gewichtsverhältnis von (M1) zu (M2) in (M) zueinander in einem Bereich von 25:1 bis 3:1 liegt, jeweils bezogen auf den Festkörpergehalt von (M1) und (M2), und wenigstens eine der in (M) enthaltenen Komponenten (M1), (M2) und gegebenenfalls (M3) hydrolysierbare Silan-Gruppen aufweist, eine Verwendung von (M) als Härter und Haftvermittler in einer Beschichtungszusammensetzung, eine solche Beschichtungszusammensetzung sowie Verfahren zur zumindest teilweisen Beschichtung eines Substrats mit einer Füllerschicht und zur zumindest teilweisen Beschichtung eines Substrats mit einer Mehrschichtlackierung.

An den Lackaufbau von Nutzfahrzeugen und Personenfahrzeugen werden hohe Anforderungen gestellt. Bei einem typischen Aufbau sind auf einem mit einer Elektrotauchlackierung beschichteten Metallsubstrat eine Füllerschicht und eine Decklackschicht oder eine Basislackschicht und eine Klarlackschicht aufgebracht. Üblicherweise vereint die Decklackschicht dabei die Funktionen eines Basis- und eines Klarlacks miteinander. Ein nach wie vor großes Problem bei einer hieraus resultierenden Lackierung stellt die Haftung zwischen Füller- und Decklackschicht bzw. zwischen Füller- und Basislackschicht sowie die Haftung zwischen Füllerschicht und Substrat dar.

Ein vergleichbares Problem stellt sich auch bei der Automobilreparaturlackierung. In der Automobilreparaturlackierung soll das Lackierergebnis nach einem Schadensfall reproduziert oder ein Lackierfehler behoben werden. Die Reparatur einer Automobillackierung kann beispielsweise so erfolgen, dass die beschädigte Stelle zunächst abgeschliffen und anschließend ein Primer (d.h. eine Grundierung), ein Füller, ein Basislack und ein Klarlack appliziert werden. Hierbei werden andere Lacksysteme als in der Automobilserienlackierung verwendet. Dies hängt im Wesentlichen damit zusammen, dass die Automobilreparaturlackierung an einem komplett montierten und ausgestatteten Automobil durchgeführt werden muss. Fertig montierte und ausgestattete Automobile können aber nur Temperaturen von 60 bis maximal 100 °C ausgesetzt werden. Nach wie vor problematisch ist hier die Haftung zwischen Füller- und Basislackschicht sowie die Haftung zwischen Füller und Primer.

Aus WO 01/98393 A1 ist eine Beschichtungszusammensetzung zur Beschichtung von insbesondere Aluminium-Substraten bekannt. Die in dieser Beschichtungszusammensetzung enthaltenen Härter-Komponenten können Reaktionsprodukte von geeigneten funktionellen Isocyanat-Verbindungen und geeigneten funktionellen Silanen sein. Nachteilig an diesen bekannten Beschichtungszusammensetzungen ist jedoch, dass diese oftmals keine ausreichende Haftung zu den zu beschichtenden Substraten aufweisen, insbesondere wenn diese Substrate eine Primerschicht, d.h. eine Grundierung, aufweisen. Reaktionsprodukte wenigstens zweier unterschiedlicher ganz bestimmter geeigneter funktioneller Isocyanat-Verbindungen und geeigneter funktioneller Silane werden in WO 01/98393 A1 nicht beschrieben.

Aus WO 2008/074489 A1 sind Beschichtungszusammensetzungen bekannt, die Komponenten enthalten, welche hydrolysierbare Silan-Gruppen aufweisen. Beschichtungszusammensetzungen, die wenigstens zwei unterschiedliche bestimmte Isocyanat-Gruppen-haltige Komponenten in Kombination mit hydrolysierbare Silan-Gruppen aufweisenden Komponenten enthalten, werden in WO 2008/074489 A1 nicht offenbart.

Es besteht ein Bedarf an einer Beschichtungszusammensetzung, die zur Herstellung einer Füllerschicht auf der Oberfläche eines gegebenenfalls grundierten Substrats geeignet ist und die zudem eine gute Haftung der Füllerschicht zu der darunterliegenden gegebenenfalls grundierten Substratoberfläche und gegebenenfalls zudem zu wenigstens einer gegebenenfalls darüber liegenden weiteren Schicht wie einer Basislackschicht ermöglicht.

Eine Aufgabe der vorliegenden Erfindung ist es daher, eine Beschichtungszusammensetzung zur zumindest teilweisen Beschichtung eines gegebenenfalls grundierten Substrats mit einer Füllerschicht zur Verfügung zu stellen, welche gegenüber den aus dem Stand der Technik bekannten Beschichtungszusammensetzungen Vorteile aufweist. Insbesondere ist es eine Aufgabe der vorliegenden Erfindung, eine solche Beschichtungszusammensetzung zur Verfügung zu stellen, mit welcher eine verbesserte Haftung zu der darunterliegenden gegebenenfalls grundierten Substratoberfläche und gegebenenfalls zudem zu wenigstens einer gegebenenfalls darüber liegenden weiteren Schicht erzielt werden kann.

Diese Aufgabe wird gelöst durch die in den Patentansprüchen beanspruchten Gegenstände sowie den in der nachfolgenden Beschreibung beschriebenen bevorzugten Ausführungsformen dieser Gegenstände.

Ein erster Gegenstand der vorliegenden Erfindung ist ein eine als Härter und als Haftvermittler einsetzbare Mischung (M) enthaltend wenigstens zwei voneinander verschiedene, jeweils unabhängig voneinander freie und/oder blockierte Isocyanat-Gruppen aufweisende Komponenten (M1) und (M2) sowie gegebenenfalls eine weitere von (M1) und (M2) verschiedene Komponente (M3),
wobei die Komponente (M1) wenigstens ein aliphatisches Polyisocyanat umfasst, und
die Komponente (M2) wenigstens ein aliphatisches, Polyether-Einheiten aufweisendes Polyisocyanat umfasst,
dadurch gekennzeichnet, dass das relative Gewichtsverhältnis der Komponenten (M1) zu (M2) in der Mischung (M) zueinander in einem Bereich von 25:1 bis 3:1 liegt, jeweils bezogen auf den Festkörpergehalt der Komponenten (M1) und (M2), und
wenigstens eine der in der Mischung (M) enthaltenen Komponenten (M1), (M2) und gegebenenfalls (M3) hydrolysierbare Silan-Gruppen aufweist.

Diese erfindungsgemäße Mischung (M) eignet sich als Härter und Haftvermittler in Beschichtungszusammensetzungen, die zur zumindest teilweisen Beschichtung eines gegebenenfalls zumindest teilweise wenigstens mit einer Grundierungsschicht beschichteten Substrats mit einer Füllerschicht geeignet sind. Ein weiterer Gegenstand der vorliegenden Erfindung ist daher eine Verwendung dieser erfindungsgemäßen Mischung (M) als Härter und als Haftvermittler in einer Beschichtungszusammensetzung, die zur zumindest teilweisen Beschichtung eines gegebenenfalls zumindest teilweise wenigstens mit einer Grundierungsschicht beschichteten Substrats mit einer Füllerschicht geeignet ist.

Ein weiterer Gegenstand der vorliegenden Erfindung ist eine Beschichtungszusammensetzung umfassend
wenigstens die erfindungsgemäße als Härter und als Haftvermittler einsetzbare Mischung (M),
d.h. eine Mischung (M) enthaltend wenigstens zwei voneinander verschiedene, jeweils unabhängig voneinander freie und/oder blockierte Isocyanat-Gruppen aufweisende Komponenten (M1) und (M2) sowie gegebenenfalls eine weitere von (M1) und (M2) verschiedene Komponente (M3), wobei die Komponente (M1) wenigstens ein aliphatisches Polyisocyanat umfasst, und die Komponente (M2) wenigstens ein aliphatisches, Polyether-Einheiten aufweisendes Polyisocyanat umfasst, dadurch gekennzeichnet, dass das relative Gewichtsverhältnis der Komponenten (M1) zu (M2) in der Mischung (M) zueinander in einem Bereich von 25:1 bis 3:1 liegt, jeweils bezogen auf den Festkörpergehalt der Komponenten (M1) und (M2), und wenigstens eine der in der Mischung (M) enthaltenen Komponenten (M1), (M2) und gegebenenfalls (M3) hydrolysierbare Silan-Gruppen aufweist,
wenigstens ein von den Komponenten (M1) und (M2) sowie gegebenenfalls (M3) der Mischung (M) verschiedenes polymeres Harz (N) und wenigstens ein Pigment (P)
zur zumindest teilweisen Beschichtung eines gegebenenfalls zumindest teilweise wenigstens mit einer Grundierungsschicht beschichteten Substrats mit einer Füllerschicht.

Es wurde überraschend gefunden, dass durch den Einsatz der erfindungsgemäßen Mischung (M) bzw. der erfindungsgemäßen Beschichtungszusammensetzung zur Herstellung einer Füllerschicht auf einer gegebenenfalls zumindest teilweise grundierten Substratoberfläche, eine gute Haftung zu der darunterliegenden gegebenenfalls zumindest teilweise grundierten Substratoberfläche und zudem zu einer gegebenenfalls darüber liegenden weiteren Schicht wie einer Basislackschicht erzielt werden kann, insbesondere aufgrund der Gegenwart der Polyether-Einheiten aufweisenden Komponente (M2) und der wenigstens einen hydrolysierbare Silan-Gruppen aufweisenden Komponente in der erfindungsgemäßen Mischung (M) und der diese enthaltene Beschichtungszusammensetzung. Dabei hat sich überraschenderweise herausgestellt, dass diese gute Haftung auch noch erzielt werden kann, nachdem das entsprechende mit der erfindungsgemäßen Beschichtungszusammensetzung und gegebenenfalls mit wenigstens einer weiteren darauf aufgebrachten Schicht beschichtete, gegebenenfalls zumindest teilweise grundierte, Substrat bestimmten Belastungen, insbesondere verschiedenen klimatischen Bedingungen wie einer Bewitterung, ausgesetzt worden ist und/oder bei diesen Bedingungen gelagert worden ist. Auch nach einer Lagerung konnte überraschenderweise keine signifikante Verschlechterung der Haftungseigenschaften beobachtet werden.

Der Begriff "umfassend" im Sinne der vorliegenden Erfindung, beispielsweise in Zusammenhang mit der erfindungsgemäßen Mischung (M) bzw. der erfindungsgemäßen Beschichtungszusammensetzung, hat in einer bevorzugten Ausführungsform die Bedeutung "bestehend aus". Dabei können - hinsichtlich der erfindungsgemäßen Mischung (M) - in dieser bevorzugten Ausführungsform neben den Komponenten (M1), (M2) und gegebenenfalls (M3), gegebenenfalls zudem wenigstens eine weitere optionale Komponente (M4) und/oder wenigstens ein organisches Lösemittel in der erfindungsgemäßen Mischung (M) enthalten sein. Alle Komponenten können jeweils in einer ihrer nachstehend genannten bevorzugten Ausführungsformen in der erfindungsgemäßen Mischung (M) enthalten sein. Ferner können - hinsichtlich der erfindungsgemäßen Beschichtungszusammensetzung - in dieser bevorzugten Ausführungsform neben den Komponenten (M), (N) und (P), gegebenenfalls zudem wenigstens eine weitere optionale Komponente (Q) und/oder wenigstens ein organisches Lösemittel in der erfindungsgemäßen Beschichtungszusammensetzung enthalten sein. Alle Komponenten können jeweils in einer ihrer nachstehend genannten bevorzugten Ausführungsformen in der erfindungsgemäßen Beschichtungszusammensetzung enthalten sein.

Vorzugsweise addieren sich die Anteile in Gew.-% der in der erfindungsgemäßen Mischung (M) enthaltenen Komponenten (M1), (M2) und gegebenenfalls (M3), der gegebenenfalls vorhandenen wenigstens einen weiteren optionalen Komponente (M4) und/oder des gegebenenfalls vorhandenen wenigstens einen organischen Lösemittels auf 100 Gew.-%, bezogen auf das Gesamtgewicht der Mischung (M).

Vorzugsweise addieren sich die Anteile in Gew.-% der in der erfindungsgemäßen Beschichtungszusammensetzung enthaltenen Komponenten (M), (N) und (P), der gegebenenfalls vorhandenen wenigstens einen weiteren optionalen Komponente (Q) und/oder des gegebenenfalls vorhandenen wenigstens einen organischen Lösemittels auf 100 Gew.-%, bezogen auf das Gesamtgewicht der Beschichtungszusammensetzung.

### Substrat

Als erfindungsgemäß eingesetztes Substrat eignen sich alle üblicherweise eingesetzten und dem Fachmann bekannten Substrate, insbesondere jedoch metallische Substrate. Vorzugsweise sind die erfindungsgemäß eingesetzten Substrate ausgewählt aus der Gruppe bestehend aus Stahl, vorzugsweise Stahl ausgewählt aus der Gruppe bestehend aus kalt gewalztem Stahl, verzinktem Stahl wie tauchverzinktem Stahl, legierungsverzinktem Stahl (wie beispielsweise Galvalume, Galvannealed oder Galfan) und aluminiertem Stahl, Aluminium und Magnesium, insbesondere eignet sich verzinkter Stahl wie zum Beispiel tauchverzinkter Stahl. Die Oberfläche des eingesetzten Substrats kann zumindest teilweise verzinkt sein wie zum Beispiel im Fall von Zn/Mg-Legierungen und Zn/Ni-Legierungen. Als Substrate eignen sich insbesondere Teile von Karosserien oder vollständige Karosserien von zu produzierenden Automobilen. Bevor das jeweilige Substrat eingesetzt wird, erfolgt vorzugsweise eine Reinigung und/oder Entfettung des Substrats.

### Erfindungsgemäße Mischung (M)

Die erfindungsgemäße Mischung (M) kann als Härter und als Haftvermittler eingesetzt werden.

Die Komponenten (M1) und (M2) sowie die gegebenenfalls vorhandene Komponente (M3) sind jeweils voneinander verschieden.

Vorzugsweise weisen die Komponenten (M1) und (M2) jeweils wenigstens freie Isocyanat-Gruppen auf. Gegebenenfalls können sowohl (M1) als auch (M2) zudem zusätzlich blockierte Isocyanat-Gruppen aufweisen. Zur zumindest teilweisen Blockierung der Isocyanat-Gruppen werden diese zumindest teilweise mit einer hierfür geeigneten Verbindung umgesetzt, so dass das gebildete blockierte Polyisocyanat insbesondere gegenüber reaktiven funktionellen Gruppen wie beispielsweise Hydroxyl-Gruppen bei Raumtemperatur, d.h. bei einer Temperatur von 18 bis 23°C beständig ist, bei erhöhten Temperaturen, beispielsweise bei ≥ 80°C bevorzugter ≥ 110°C, besonders bevorzugt ≥ 130°C und ganz besonders bevorzugt ≥ 140°C oder bei 90°C bis 300°C oder bei 100 bis 250°C, noch bevorzugter bei 125 bis 250°C und besonders bevorzugt bei 150 bis 250°C, aber reagiert.

Vorzugsweise liegt das relative Gewichtsverhältnis der Komponenten (M1) zu (M2) in der Mischung (M) zueinander in einem Bereich von 20:1 bis 4:1, besonders bevorzugt 20:1 bis 5:1, jeweils bezogen auf den Festkörpergehalt der Komponenten (M1) und (M2). In einer anderen bevorzugten Ausführungsform liegt das relative Gewichtsverhältnis der Komponenten (M1) zu (M2) in der Mischung (M) zueinander in einem Bereich von 15:1 bis 5:1, besonders bevorzugt 15:1 bis 4:1, jeweils bezogen auf den Festkörpergehalt der Komponenten (M1) und (M2).

Die erfindungsgemäße Mischung (M) enthält zwingend die Komponenten (M1) und (M2). Gegebenenfalls kann sie zudem wenigstens eine Komponente (M3) enthalten. Darüber hinaus kann sie ferner wenigstens eine von (M1), (M2) und (M3) verschiedene Komponente (M4) und/oder wenigstens ein organisches Lösemittel enthalten. Als Komponente (M4) eignen sich insbesondere übliche Additive.

Vorzugsweise ist (M4) aus ausgewählt aus der Gruppe bestehend aus Antioxidantien, Antistatika, Emulgatoren, Verlaufshilfsmitteln, Löslichkeitsvermittlern, Entschäumungsmitteln, Benetzungsmitteln, Stabilisierungs-mitteln, vorzugsweise Hitze- und/oder Wäreme-Stabilisatoren, Prozess-Stabilisatoren und UV- und/oder Licht-Stabilisatoren, Flammschutzmitteln, Lichtschutzmitteln, Entlüftern, Inhibitoren wie Polymerisationsinhibitoren, Katalysatoren, Wachsen, Netz- und Dispergiermitteln, Flexibilisierungsmitteln, Reaktivverdünnern, Rheologiehilfs-mitteln, Hydrophobierungsmitteln, Hydrophilierungsmitteln, Thixotropiermitteln, Schlagzähmachern, Blähmitteln, Prozesshilfsmitteln, Weichmachern, Füllstoffen und Gemischen aus den vorstehend genannten weiteren Additiven. Der Gehalt an (M4) in der erfindungsgemäßen Mischung (M) kann variieren. Vorzugsweise liegt der Gehalt, bezogen auf das Gesamtgewicht der erfindungsgemäßen Mischung (M) bei 0,01 bis 20,0 Gew.-%, noch bevorzugter bei 0,05 bis 18,0 Gew.-%, besonders bevorzugt bei 0,1 bis 16,0 Gew.-%, ganz besonders bevorzugt bei 0,1 bis 14,0 Gew.-%, insbesondere bei 0,1 bis 12,0 Gew.-% und am meisten bevorzugt bei 0,1 bis 10,0 Gew.-%, jeweils bezogen auf das Gesamtgewicht der Mischung (M). In einer bevorzugten Ausführungsform enthält die Mischung (M) jedoch keine Komponente (M4).

Vorzugsweise ist die erfindungsgemäße Mischung (M) eine lösemittel-basierte Mischung (M). Die erfindungsgemäße Mischung (M) enthält daher vorzugsweise als flüssiges Verdünnungsmittel wenigstens ein organisches Lösemittel. Unter dem Begriff "lösemittel-basiert" soll im Folgenden vorzugsweise verstanden werden, dass als Lösemittel ausschließlich organische Lösemittel und kein Wasser eingesetzt wird. Insbesondere soll der Wassergehalt der erfindungsgemäße Mischung (M) nicht größer als 5 Gew.-%, und ganz besonders nicht größer als 2 Gew.-% jeweils bezogen auf das Gesamtgewicht der erfindungsgemäße Mischung (M) sein. Als Beispiele für organischen Lösemittel seien heterocyclische, aliphatische oder aromatische Kohlenwasserstoffe wie Toluol, Isophoron, Xylol, Solventnaphtha, Solvesso 100, Shellsol A, ein- oder mehrwertige Alkohole wie Ethylhexanol, Butoxypropanol, Isopropanol, Butyldiglykol, Methanol, Ethanol, Propanol und Butanol, Ether wie Diethylenglykoldimethylether und Dipropylenglycolmethylether, Ethyl- und Butylglykol, Ester wie Ethylacetat, Butylacetat, Pentylacetat oder Ethylethoxypropionat, Ketone wie Cyclohexanon, Methylethylketon (MEK), Methylamylketon, Methylisobutylketon (MIBK) und Aceton, und Amide, wie z. B. N-Methylpyrrolidon, N-Ethylpyrrolidon und Dimethylformamid, vorzugsweise Toluol, Xylol, Solventnaphtha, Solvesso 100 und Shellsol A, genannt. Vorzugsweise ist die Mischung (M) eine lösemittelhaltige Dispersion wenigstens der Komponenten (M1) und (M2) sowie gegebenenfalls (M3).

Vorzugsweise weisen (M1) und (M2) unabhängig voneinander ein gewichtsmittleres Molekulargewicht von 1 000 bis 100 000 g/mol, besonders bevorzugt von 3 000 bis 80 000 g/mol, ganz besonders bevorzugt von 5 000 bis 60 000 g/mol, insbesondere von 7 000 bis 55 000 g/mol oder von 7 500 bis 50 000 g/mol, noch bevorzugter von 10 000 bis 40 000 g/mol, am meisten bevorzugt von 10 000 bis 30 000 g/mol auf. Die Bestimmungsmethode zur Ermittlung des gewichtsmittleren Molekulargewichts ist nachstehend beschrieben.

Vorzugsweise weisen (M1) und (M2) unabhängig voneinander ein zahlenmittleres Molekulargewicht von 100 bis 50 000 g/mol, besonders bevorzugt von 5 00 bis 40 000 g/mol, ganz besonders bevorzugt von 1 000 bis 25 000 g/mol, insbesondere von 2 000 bis 20 000 g/mol, noch bevorzugter von 3 000 bis 15 000 g/mol, am meisten bevorzugt von 3 500 bis 10 000 g/mol auf. Die Bestimmungsmethode zur Ermittlung des zahlenmittleren Molekulargewichts ist nachstehend beschrieben.

### Komponente (M1)

Die Komponente (M1) umfasst, vorzugsweise ist, wenigstens ein aliphatisches Polyisocyanat. Vorzugsweise umfasst Komponente (M1) wenigstens ein aliphatisches Polyisocyanat, welches - im Gegensatz zu Komponente (M2) - keine Polyether-Einheiten aufweist, wodurch sich (M1) wenigstens diesbezüglich von (M2) unterscheidet.

Polyisocyanate im Sinne der vorliegenden Erfindung sind vorzugsweise solche Verbindungen und/oder Komponenten, die im Mittel vorzugsweise wenigstens eine Isocyanat-Gruppe, besonders bevorzugt im Mittel wenigstens zwei und/oder wenigsten drei Isocyanat-Gruppen enthalten.

Zur Herstellung von als Komponente (M1) einsetzbaren Polyisocyanaten eignen sich beispielsweise Diisocyanate, die 2 bis 36, insbesondere 6 bis 15 Kohlenstoffatome enthalten. Bevorzugte Beispiele sind 1,2-Ethylendiisocyanat, 1,4-Tetramethylendiisocyanat, 1,6-Hexamethylendiisocyanat (HDI), 2,2,4-(2,4,4)-Trimethyl-1,6-hexamethylendi-isocyanat (TMDI), 1,3-Bis(1-isocyanato-1-methylethyl)benzol, Diphenylmethan-diisocyanat (MDI), 1,9-Diisocyanato-5-methylnonan, 1,8-Diisocyanato-2,4-dimethyloctan, 1,12-Dodecandiisocyanat, ω,ω'-Diisocyanatodipropylether, 3-Isocyanato-methyl-3,5,5-trimethyl-cyclohexylisocyanat (Isophorondiisocyanat, IPDI), 1,4-Diisocyanatomethyl-2,3,5,6-tetramethyl-cyclohexan, 5-ylendimethylendi-isocyanat, cyclohexan, Perhydro-2,4'-diphenylmethandiisocyanat, 2-Methyl-1,5-diisocyanatopentan (MPDI), 2-Ethyl-1,4-diisocyanatobutan, 1,10-Diisocyanatodecan, 1,5-Diisocyanatohexan, 1,3-Diisocyanatomethylcyclohexan, 1,4-Diisocyanatomethylcyclohexan, Tetramethylxylyldiisocyanat (TMXDI), sowie jede Mischung dieser Komponenten.

Als Komponente (M1) geeignete Polyisocyanate werden im Sinne dieser Erfindung vorzugsweise Oligomere und/oder Polymere von Diisocyanaten verstanden. Basis für solche Polyisocyanate sind die vorstehend genannten Diisocyanate oder Mischungen davon, vorzugsweise Hexamethylendiisocyanat (HMDI), Isophorondiisocyanat (IPDI), Diphenylmethandiisocyanat (MDI) und/oder Tetramethylxylyldiisocyanat (TMXDI), insbesondere Hexamethylendiisocyanat (HMDI) und/oder Isophorondiisocyanat (IPDI). Verfahren zur Oligomerisierung bzw. Polymerisierung sind dem Fachmann bekannt und bestehen üblicherweise in der Bildung verschiedener Addukte, insbesondere von Urethanen, Allophananten, Biuret-Verbindungen, Uretdionen und Isocyanuraten.

Besonders bevorzugt werden Isocyanurat-Trimere des Hexamethylendiisocyanats und/oder des Isophorondiisocyanats und/oder Oligomere und/oder Polymere von Isophorondiisocyanat und/oder Hexamethylendiisocyanats als (M1) eingesetzt. Dem Fachmann sind kommerziell erhältliche Produkte bekannt, die als Komponente (M1) eingesetzt werden können. Beispiele sind die Produkte Desmodur® der Firma Bayer wie zum Beispiel Desmodur® XP 2565 und/oder Desmodur® N 3600.

Vorzugsweise weist (M1) einen NCO-Gehalt in einem Bereich von 8 bis 25 Gew.-%, besonders bevorzugt in einem Bereich von 10 bis 25 Gew.-% auf, jeweils bezogen auf das Gesamtgewicht der Komponente (M1). Der NCO-Gehalt wird gemäß der in DIN EN ISO 11909 (Datum: Mai 2007) beschriebenen Methode ermittelt.

### Komponente (M2)

Die Komponente (M2) umfasst, vorzugsweise ist, wenigstens ein aliphatisches, Polyether-Einheiten aufweisendes Polyisocyanat. Durch die Anwesenheit der Polyether-Einheiten zeichnet sich die Komponente (M2) insbesondere im Vergleich zur Komponente (M1) durch eine höhere Hydrophilie aus. Durch die Gegenwart der Polyether-Einheiten sind die entsprechenden Polyisocyanate Polyether-modifiziert.

Zur Herstellung von als Komponente (M2) einsetzbaren Polyisocyanaten können die gleichen aliphatischen Diisocyanate eingesetzt werden, die auch zur Herstellung der Komponente (M1) eingesetzt werden. Diese können beispielsweise mit monofunktionellen Polyalkylenoxidpolyetheralkoholen, insbesondere Polyethylenoxidpolyetheralkoholen und/oder Polypropylenoxidpolyetheralkoholen umgesetzt werden, wobei die entsprechenden monofunktionellen Polyalkylenoxidpolyetheralkohole vorzugsweise im molaren Unterschuss eingesetzt werden. Die entsprechenden als Komponente (M2) einsetzbaren Produkte enthalten somit vorzugsweise wenigstens eine Urethan-Gruppe. Alternativ können wenigstens zwei aliphatische Diisocyanate und/oder Polyisocyanate unter Allophanatisierung mit wenigstens einem monofunktionellen Polyalkylenoxid-polyetheralkohol umgesetzt werden.

Besonders bevorzugt werden Isocyanurat-Trimere des Hexamethylendiisocyanats und/oder des Isophorondiisocyanats und/oder Oligomere und/oder Polymere von Isophorondiisocyanat zur Herstellung der Komponente (M2) eingesetzt.

Vorzugsweise weist (M2) einen NCO-Gehalt in einem Bereich von 5 bis 30 Gew.-%, besonders bevorzugt in einem Bereich von 10 bis 30 Gew.-%, insbesondere 10 bis 25 Gew.-% auf, jeweils bezogen auf das Gesamtgewicht der Komponente (M2). Der NCO-Gehalt wird gemäß der in DIN EN ISO 11909 (Datum: Mai 2007) beschriebenen Methode ermittelt.

Vorzugsweise ist wenigstens ein Anteil von 1 bis 60 mol-%, besonders bevorzugt ein Anteil von 2 bis 55 mol-%, ganz besonders bevorzugt ein Anteil von 5 bis 50 mol-% aller in der Komponente (M2) enthaltenen Isocyanat-Gruppen mit wenigstens einer Polyether-Einheit wie einer Alkoxypolyoxyalkylen-Gruppe modifiziert.

Vorzugsweise weist die Komponente (M2) neben freien und/oder blockierten Isocyanat-Gruppen wenigstens eine Alkoxypolyoxyalkylen-Gruppe wie eine Methoxypolyoxyalkylen-Gruppe, besonders bevorzugt wenigstens eine Gruppe (I)

-O-[(CH₂)ₙ-O]ₘ-R¹ (I)

auf, wobei
n für 1-4, vorzugsweise für 2 oder 3 steht,
m für 3 bis 10, vorzugsweise für 5 oder 6, steht und
R¹ für C₁₋₆-Alkyl, vorzugsweise für Methyl steht.

Das divalente Sauerstoffatom innerhalb der Gruppe (I) ist dabei an das aliphatische Polyisocyanat-Grundgerüst gebunden, vorzugsweise über eine -(C=O)-N(R²)-(A)-Einheit, worin A für eine C₁₋₈-Alkylen-Gruppe steht. Somit ergibt sich unter Einbezug der Gruppe (I) vorzugsweise die Struktur

-(A)-N(R²)-C(=O)-O-[(CH₂)ₙ-O]ₘ-R¹,

welche über die Variable an das aliphatische Polyisocyanat-Grundgerüst gebunden ist,
in der m, n und R¹ die vorstehenden Bedeutungen haben,
A für eine C₁₋₈-Alkylen-Gruppe steht und
R² für H oder für -(C=O)-N(H)-(C₁₋₈-Alkylen) steht, wobei die C₁₋₈-Alkylen-Gruppe an ein weiteres aliphatisches Polyisocyanat-Grundgerüst gebunden ist.

Vorzugsweise umfasst die Komponente (M2) wenigstens ein aliphatisches, Polyether-Einheiten aufweisendes Polyisocyanat ausgewählt aus der Gruppe bestehend aus 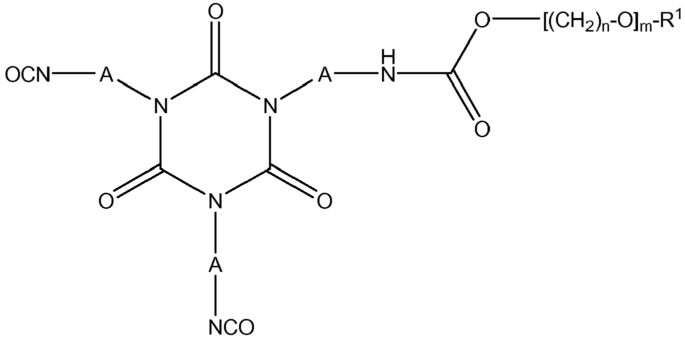 und 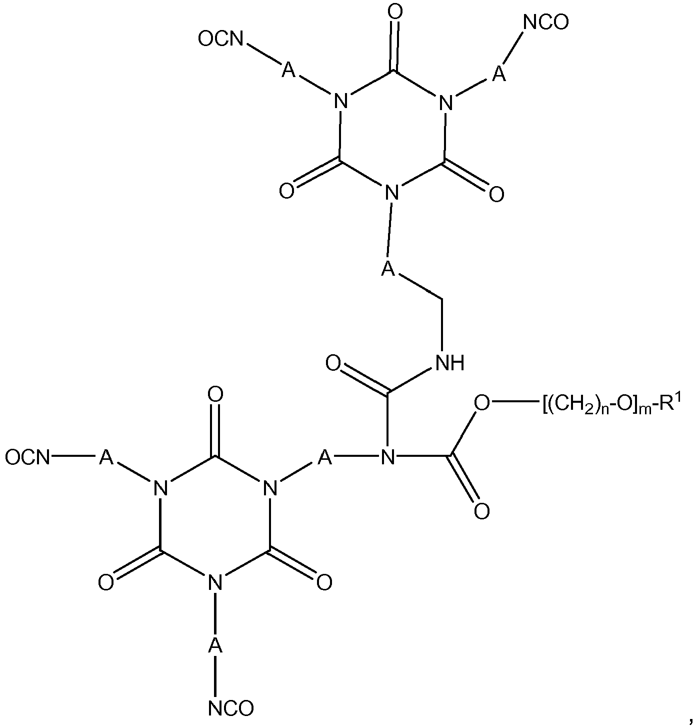 sowie Mischungen davon.
worin, jeweils unabhängig voneinander,
A für eine C₁₋₈-Alkylen-Gruppe steht,
n für 1-4, vorzugsweise für 2 oder 3 steht,
m für 3 bis 10, vorzugsweise für 5 oder 6, steht und
R¹ für C₁₋₆-Alkyl, vorzugsweise für Methyl steht.

Dem Fachmann sind kommerziell erhältliche Produkte bekannt, die als Komponente (M2) eingesetzt werden können. Beispiele sind die Produkte Bayhydur® der Firma Bayer wie zum Beispiel Bayhydur® 3100, Bayhydur® 401-70, Bayhydur® VP LS 2306, Bayhydur® VP LS 2319, Bayhydur® 304 und/oder Bayhydur® 305.

Vorzugsweise enthält die Mischung (M) wenigstens 5 Gew.-%, besonders bevorzugt wenigstens 6 Gew.-%, ganz besonders bevorzugt wenigstens 7 Gew.-%, der Komponente (M2), bezogen auf den gesamten Festkörperanteil der Mischung (M).

### Komponente (M3)

Wenigstens eine der in der Mischung (M) enthaltenen Komponenten (M1), (M2) und gegebenenfalls (M3) weist hydrolysierbare Silan-Gruppen auf.

### Vorzugsweise weisen

(i) die in der Mischung (M) enthaltenen Komponenten (M1) und (M2) jeweils hydrolysierbare Silan-Gruppen auf oder
(ii) die in der Mischung (M) enthaltenen Komponenten (M1) und (M2) weisen jeweils keine hydrolysierbare Silan-Gruppen auf, sondern die Mischung (M) enthält neben den Komponenten (M1) und (M2) die wenigstens eine weitere Komponente (M3), welche hydrolysierbare Silan-Gruppen aufweist.

Im Fall der Alternative (i) kann die Mischung (M) gegebenenfalls zusätzlich eine Komponente (M3) aufweisen, welche (ebenfalls) hydrolysierbare Silan-Gruppen aufweist. Alternative (i) ist bevorzugt.

### Vorzugsweise ist

(i) die Mischung (M) erhältlich durch Mischen der Komponenten (M1) und (M2) und teilweiser Umsetzung der Isocyanat-Gruppen der Komponenten (M1) und (M2) mit wenigstens einer hydrolysierbaren Silan-Verbindung, welche wenigstens eine gegenüber Isocyanat-Gruppen reaktive funktionelle Gruppe aufweist, oder
(ii) die Mischung (M) ist erhältlich durch Mischen der Komponenten (M1) und (M2) und Zugabe wenigstens einer hydrolysierbaren Silan-Verbindung als Komponente (M3) zu den Komponenten (M1) und (M2).

Im Fall der Alternative (i) kann gegebenenfalls zur Herstellung von (M) zusätzlich eine Komponente (M3) eingesetzt werden, welche hydrolysierbare Silan-Gruppen aufweist.

Vorzugsweise werden die Isocyanat-Gruppen der Komponenten (M1) und (M2) im Fall von (i) teilweise mit wenigstens einer geeigneten hydrolysierbaren Silan-Verbindung umgesetzt, besonders bevorzugt derart, dass 1 bis 60 mol-%, besonders bevorzugt 2 bis 50 mol-%, ganz besonders bevorzugt 5 bis 40 mol-%, insbesondere bevorzugt 5 bis 30 mol-% oder 5 bis 20 mol-% aller in (M1) und (M2) enthaltenen Isocyanat-Gruppen umgesetzt worden sind.

Hydrolysierbare Silan-Verbindungen, welche wenigstens eine gegenüber Isocyanat-Gruppen reaktive funktionelle Gruppe aufweisen, und zur Herstellung der Mischung (M) gemäß Alternative (i) eingesetzt werden, sind dem Fachmann bekannt. Gegenüber Isocyanat-Gruppen reaktive funktionelle Gruppen sind insbesondere OH-Gruppen, Thiol-Gruppen, Carboxyl-Gruppen, primäre und sekundäre Amino-Gruppen sowie Mischungen davon, bevorzugt Carboxyl-Gruppen, primäre und sekundäre Amino-Gruppen sowie Mischungen davon, besonders bevorzugt primäre und sekundäre Amino-Gruppen.

Hydrolysierbare Silan-Verbindungen, welche wenigstens eine primäre und/oder sekundäre Amino-Gruppe enthalten, sind beispielsweise 3-Aminopropyltrimethoxysilan (APS), 3-Aminopropyltriethoxysilan, 3-Aminopropyltriisopropoxysilan, 2-Aminoethyltri-methoxysilan, 2-Aminoethyltriethoxysilan, 2-Aminoethyltriisopropoxysilan, Aminomethyltrimethoxysilan, Aminomethyltriethoxysilan, Aminomethyl-triisopropoxysilan, 3-(2-Aminoethyl)aminopropyltrimethoxysilan (AEAPS), 3-(2-Aminoethyl)aminopropyltriethoxysilan, 3-(2-Aminoethyl)aminopropyltriisopropoxysilan, 2-(2-Aminoethyl)aminoethyltrimethoxysilan, 2-(2-Aminoethyl)aminoethyltriethoxysilan 2-(2-Aminoethyl)aminoethyltriisopropoxysilan, 3-(3-Aminopropyl)aminopropyltrimethoxysilan, 3-(3-Aminopropyl)aminopropyltriethoxysilan, 3-(3-Aminopropyl)aminopropyltriisopropoxysilan, Diethylentriaminopropyltrimethoxysilan, Diethylentriaminopropyltriethoxysilan, N-(n-Butyl)-3-aminopropyltrimethoxysilan, N-(n-Butyl)-3-aminopropyltriethoxysilan, N-Cylohexylaminomethyltriethoxysilan, N-Cylohexylaminomethyltrimethoxysilan,N-Ethyl-γ-aminoisobutyltrimethoxysilan, N-Ethyl-γ-aminoisobutyltriethoxysilan, N-(Vinylbenzyl)-2-aminoethyl-3-aminopropyltrimethoxysilan-Hydrochlorid, N-Phenyl-γ-aminopropyltrimethoxysilan, N-Phenyl-γ-aminopropyltriethoxysilan, γ-Ureidopropyltrimethoxysilan, γ-Ureidopropyltriethoxysilan, N-Methyl-[3-(trimethoxysilyl)propyl]carbamat, und/oder N-Trimethoxysilylmethyl-O-methylcarbamat sowie Bis-[γ-(triethoxysilyl)propyl]amin, Bis-[γ-(trimethoxysilyl)propyl]amin. Bis-[γ-(triethoxysilyl)propyl]amin, Bis-[γ-(trimethoxysilyl)propyl]amin sind besonders bevorzugt.

Hydrolysierbare Silan-Verbindungen, welche wenigstens eine Tiol-Gruppe enthalten, sind beispielsweise 3-Mercaptopropyltrimethoxysilan (MPTMS), 3-Mercaptopropyltriethoxysilan, 3-Mercaptopropyltriisopropoxysilan, 2-Mercaptoethyltrimethoxysilan, 2-Mercaptoethyltriethoxysilan und/oder 2-Mercaptoethyltriisopropoxysilan.

Im Fall der Alternative (ii) wird den Komponenten (M1) und (M2) vorzugsweise wenigstens eine hydrolysierbare Silan-Verbindung als Komponente (M3) zugesetzt, die keine insbesondere bei Standardbedingungen von 18-23°C und 1 bar gegenüber Isocyanat-Gruppen reaktive funktionelle Gruppe aufweist. Vorzugsweise weist diese hydrolysierbare Silan-Verbindung als Komponente (M3) jedoch dennoch wenigstens eine geeignete funktionelle Gruppe auf, insbesondere wenigstens eine Epoxid-Gruppe. Vorzugsweise wird den Komponenten (M1) und (M2) wenigstens eine geeignete hydrolysierbare Silan-Verbindung als Komponente (M3) in einer Menge in einem Bereich von 1 bis 15 Gew.-%, besonders bevorzugt in einem Bereich von 2 bis 15 Gew.-%, ganz besonders bevorzugt in einem Bereich von 2,5 bis 12,5 Gew.-%, bezogen auf das Gesamtgewicht der Mischung (M) zugesetzt.

Hydrolysierbare Silan-Verbindungen, welche wenigstens eine Epoxid-Gruppe enthalten, sind beispielsweise 3-Glycidoxypropyltrimethoxysilan (GLYMO), 3-Glycidoxypropyltriethoxysilan, 3-Glycidoxypropyltriisopropoxyoxysilan, 2-Glycidoxyethyltrimethoxysilan, 2-Glycidoxyethyltriethoxysilan, 2-Glycidoxyethyltriisopropoxyoxysilan, β-(3,4-Epoxycyclohexyl)-ethyltrimethoxysilan, und/oder β-(3,4-Epoxycyclohexyl)-ethyltriethoxysilan.

Durch Gegenwart der Epoxid-Gruppe ist eine Vernetzung der entsprechenden hydrolysierbaren Silan-Verbindung (M3) mit geeigneten funktionellen Gruppen des polymeren Harzes (N) wie OH-Gruppen möglich, wenn die Mischung (M) als ein Bestandteil einer Beschichtungszusammensetzung wie der erfindungsgemäßen Beschichtungszusammensetzung eingesetzt wird.

### Verwendung der Mischung (M) als Härter und Haftvermittler

Ein weiterer Gegenstand der vorliegenden Erfindung ist eine Verwendung der erfindungsgemäßen Mischung (M) als Härter und als Haftvermittler in einer Beschichtungszusammensetzung, die zur zumindest teilweisen Beschichtung eines gegebenenfalls zumindest teilweise wenigstens mit einer Grundierungsschicht beschichteten Substrats mit einer Füllerschicht geeignet ist.

Die Mischung (M) kann insbesondere zur Verbesserung der Haftung bei der Autoreparaturlackierung eingesetzt. Unter dem Begriff "Autoreparaturlackierung" ist vorzugsweise unter anderem die Reparaturlackierung zu verstehen, welche beispielsweise in einer Werkstatt zur Ausbesserung von beschädigten Altlackierungen stattfindet. Fehlstellen in Lacken können grundsätzlich auch direkt nach erfolgter OEM-Lackierung auftreten. Man spricht dann von OEM-Reparaturlackierung. Die erfindungsgemäße Mischung (M) kann in der OEM-Reparaturlackierung eingesetzt werden. In beiden Fällen eignet sich die erfindungsgemäße Mischung (M), insbesondere als Teil der erfindungsgemäßen Beschichtungszusammensetzung, auch zur Ausbesserung von kleinen Fehlstellen, den sogenannten "Spots". Ein solcher Prozess wird auch als "Spot Repair" bezeichnet.

Alle im Zusammenhang mit der erfindungsgemäßen Mischung (M) hierin zuvor beschriebene bevorzugte Ausführungsformen sind auch bevorzugte Ausführungsformen hinsichtlich der Verwendung dieser Mischung (M) als Härter und Haftvermittler in einer Beschichtungszusammensetzung, die zur zumindest teilweisen Beschichtung eines gegebenenfalls zumindest teilweise wenigstens mit einer Grundierungsschicht beschichteten Substrats mit einer Füllerschicht geeignet ist.

### Erfindungsgemäße Beschichtungszusammensetzung

Die erfindungsgemäße Beschichtungszusammensetzung ist geeignet zur zumindest teilweisen Beschichtung eines gegebenenfalls zumindest teilweise wenigstens mit einer Grundierungsschicht beschichteten Substrats mit einer Füllerschicht. Der Begriff "Füller" bzw. "Füllerschicht" ist dem Fachmann bekannt und beispielsweise definiert im Römpp Lexikon, Lacke und Druckfarben, Georg Thieme Verlag 1998.

Alle im Zusammenhang mit der erfindungsgemäßen Mischung (M) hierin zuvor beschriebene bevorzugte Ausführungsformen sind auch bevorzugte Ausführungsformen hinsichtlich des Einsatzes dieser Mischung (M) als Komponente in der erfindungsgemäßen Beschichtungszusammensetzung.

Vorzugsweise ist die erfindungsgemäße Beschichtungszusammensetzung eine lösemittel-basierte Beschichtungszusammensetzung. Die erfindungsgemäße Beschichtungszusammensetzung enthält daher vorzugsweise als flüssiges Verdünnungsmittel wenigstens ein organisches Lösemittel. Unter dem Begriff "lösemittel-basiert" soll im Folgenden vorzugsweise verstanden werden, dass als Lösemittel ausschließlich organische Lösemittel und kein Wasser eingesetzt wird. Insbesondere soll der Wassergehalt des erfindungsgemäßen Beschichtungszusammensetzungen nicht größer als 5 Gew.-%, und ganz besonders nicht größer als 2 Gew.-% jeweils bezogen auf das Gesamtgewicht der erfindungsgemäßen Beschichtungszusammensetzung betragen. Als Beispiele für organischen Lösemittel seien heterocyclische, aliphatische oder aromatische Kohlenwasserstoffe wie Toluol, Isophoron, Xylol, Solventnaphtha, Solvesso 100, Shellsol A, ein- oder mehrwertige Alkohole wie Ethylhexanol, Butoxypropanol, Isopropanol, Butyldiglykol, Methanol, Ethanol, Propanol und Butanol, Ether wie Diethylenglykoldimethylether und Dipropylenglycolmethylether, Ethyl- und Butylglykol, Ester wie Ethylacetat, Butylacetat, Pentylacetat oder Ethylethoxypropionat, Ketone wie Cyclohexanon, Methylethylketon (MEK), Methylamylketon, Methylisobutylketon (MIBK) und Aceton, und Amide, wie z. B. N-Methylpyrrolidon, N-Ethylpyrrolidon, Dimethylformamid, vorzugsweise Toluol, Xylol, Solventnaphtha, Solvesso 100 und Shellsol A, genannt.

Die erfindungsgemäße Beschichtungszusammensetzung liegt vorzugsweise in Form einer Dispersion oder Lösung, insbesondere in Form einer Dispersion vor.

Vorzugsweise weist die erfindungsgemäße Beschichtungszusammensetzung einen Festkörpergehalt, d.h. einen nicht-flüchtigen Anteil, im Bereich von 5 bis 70 Gew.-%, besonders bevorzugt im Bereich von 10 bis 60 Gew.-%, ganz besonders bevorzugt im Bereich von 15 bis 50 Gew.-%, insbesondere bevorzugt im Bereich von 17,5 bis 40 Gew.-% oder von 20 bis 30 Gew.-%, jeweils bezogen auf das Gesamtgewicht der Beschichtungszusammensetzung auf. Dem Fachmann sind Bestimmungsmetoden zur Ermittlung des Festkörpergehalts, d.h. der nicht-flüchtigen Anteile bekannt. Die Bestimmung des Festkörpergehalts erfolgt dabei gemäß der nachstehend beschriebenen Methode.

### Mischung (M) als Komponente der Beschichtungszusammensetzung

Die erfindungsgemäße Beschichtungszusammensetzung enthält die erfindungsgemäße Mischung (M) als Härter und Haftvermittler. Vorzugsweise enthält die erfindungsgemäße Beschichtungszusammensetzung die als Härter und Haftvermittler eingesetzte Mischung (M) in einer Menge in einem Bereich von 5 bis 25 Gew.-%, besonders bevorzugt in einem Bereich von 7,5 bis 20 Gew.-%, bezogen auf das Gesamtgewicht der Beschichtungszusammensetzung, und vorzugsweise bezogen auf den Festkörper der Mischung (M).

### Polymeres Harz (N) als Komponente der Beschichtungszusammensetzung

Vorzugsweise enthält die erfindungsgemäße Beschichtungszusammensetzung wenigstens ein polymeres Harz (N) als Bestandteil der Bindemittel-Komponente.

Unter dem Begriff "Bindemittel" werden im Sinne der vorliegenden Erfindung in Einklang mit der DIN EN ISO 4618 (deutsche Fassung, Datum: März 2007) vorzugsweise die vorzugsweise für die Filmbildung verantwortlichen nicht-flüchtigen Anteile einer Beschichtungszusammensetzung wie der erfindungsgemäßen Beschichtungszusammensetzung verstanden. Darin enthaltene Pigmente einschließlich des Pigments (N) und gegebenenfalls vorhandene Füllstoffe werden somit nicht unter den Begriff des Bindemittels subsumiert. Der nicht-flüchtige Anteil kann gemäß der nachstehend beschriebenen Methode bestimmt werden. Insbesondere werden unter dem Begriff "Bindemittel" die für die Filmbildung verantwortlichen in der Beschichtungs-zusammensetzung enthaltenen polymeren Harze (N) verstanden. Vom Begriff des "Bindemittels" wird zudem die in der Beschichtungszusammensetzung vorhandene als Vernetzungsmittel bzw. Härter eingesetzte Mischung (M) sowie gegebenenfalls unter die Definition eines Bindemittels fallende und gegebenenfalls vorhandene Additive (Q) umfasst.

Alle üblichen dem Fachmann bekannten polymeren Harze eignen sich dabei als polymeres Harz (N) der erfindungsgemäßen Beschichtungszusammensetzung.

Vorzugsweise weist das wenigstens eine polymere Harz (N) reaktive funktionelle Gruppen aufweist, die eine Vernetzungsreaktion ermöglichen. Das polymere Harz (N) ist dabei vorzugsweise ein fremd-vernetzendes polymeres Harz. Um eine Vernetzungsreaktion zu ermöglichen, enthält die erfindungsgemäße Beschichtungszusammensetzung neben dem wenigstens einen polymeren Harz (N) zudem wenigstens die als Härter einsetzbare Mischung (M).

Das in der erfindungsgemäßen Beschichtungszusammensetzung enthaltene polymere Harz (N) bzw. wenigstens die in (M) enthaltenen Komponenten (M1) und (M2) sind vorzugsweise thermisch vernetzbar. Zusätzlich ist jedoch auch eine strahlenhärtende Vernetzung möglich. Vorzugsweise sind diese Komponenten beim Erwärmen auf eine Substrattemperatur von oder oberhalb von Raumtemperatur, d.h. bei einer Substrattemperatur von oder oberhalb von 18-23°C vernetzbar. Vorzugsweise sind diese Komponenten erst bei Substrattemperaturen ≥ 40°C, bevorzugter ≥ 50°C, besonders bevorzugt ≥ 60°C und ganz besonders bevorzugt ≥ 70°C vernetzbar.

Jede übliche dem Fachmann bekannte vernetzbare reaktive funktionelle Gruppe, welche gegenüber Isocyanat-Gruppen reaktiv ist, kommt als vernetzbare reaktive funktionelle Gruppe des polymeren Harzes (N) dabei in Betracht. Vorzugsweise weist das polymere Harze (N) wenigstens eine Art von funktionellen reaktiven Gruppen ausgewählt aus der Gruppe bestehend aus primären Amino-Gruppen, sekundären Amino-Gruppen, Hydroxyl-Gruppen, Thiol-Gruppen, Carboxyl-Gruppen, und EpoxidGruppen sowie Mischungen davon, auf. Bevorzugt sind Hydroxyl-Gruppen und/oder Carboxyl-Gruppen, insbesondere Hydroxyl-Gruppen.

Vorzugsweise ist das wenigstens eine polymere Harz (N) ausgewählt aus der Gruppe bestehend aus Polyurethanen, Polyestern, Polyamiden, Polyharnstoffen, Polystyrolen, Polycarbonaten, Poly(meth)acrylaten, Vinylester-basierten Harzen, Epoxid-Harzen sowie Mischungen davon, wobei vorzugsweise 70 bis 100 Gew.-% des polymeren Harzes aus wenigstens einem der vorstehend genannten Polymeren ausgewählt sind. Dabei werden unter den genannten Polymeren vorzugsweise jeweils sowohl Homo- als auch entsprechende Co-Polymere verstanden. Vorzugsweise ist das polymere Harz (N) ausgewählt aus der Gruppe bestehend aus Polyurethanen, Polyestern, und Poly(meth)acrylaten, entsprechenden Copolymeren dieser Polymere sowie Mischungen davon, insbesondere ausgewählt aus der Gruppe bestehend aus Polyestern, und Poly(meth)acrylaten, entsprechenden Copolymeren dieser Polymere sowie Mischungen davon. Poly(meth)acrylate umfassen Polyacrylate und Polymethacrylate.

Die genannten polymeren Harze enthalten vorzugsweise zusätzlich unterschiedliche funktionelle Gruppen zur chemischen Vernetzung, wobei Hydroxylgruppen bevorzugt sind. Bevorzugt werden Polyester- und/oder Poly(meth)acrylatharze, welche bevorzugt Hydroxylgruppen enthalten, als polymeres Harz (N) eingesetzt. Solche organischen Polymere beziehungsweise Harze werden beispielsweise im Römpp-Lexikon Lacke und Druckfarben, Georg Thieme Verlag, Stuttgart, New York, 1998, Seiten 73 bis 74, beschrieben. Polyester ergeben besonders flexible Füller. Poly(meth)acrylatharze werden bevorzugt, weil sie schneller physikalisch trocknen und letztlich eine frühere Bearbeitung zulassen. Daneben können wie zuvor erwähnt auch noch Epoxidharze eingesetzt werden. Diese werden beispielsweise im Römpp-Lexikon Lacke und Druckfarben, Georg Thieme Verlag, Stuttgart, New York, 1998, Seiten 196 bis 197, beschrieben.

Die erfindungsgemäße Beschichtungszusammensetzung enthält das wenigstens eine polymere Harz (N) vorzugsweise in einer Menge in einem Bereich von 5 bis 40 Gew.-%, besonders bevorzugt in einem Bereich von 7,5 bis 30 Gew.-%, ganz besonders bevorzugt in einem Bereich von 10 bis 25 Gew.-%, jeweils bezogen auf das Gesamtgewicht der Beschichtungszusammensetzung.

Die Auswahl und Kombination von geeigneten polymeren Harzen (N) erfolgt je nach den gewünschten und/oder erforderlichen Eigenschaften des herzustellenden Beschichtungssystems. Eine Auswahlkriterium sind die gewünschten und/oder erforderlichen Härtungsbedingungen, insbesondere die Härtungstemperaturen (Vernetzungstemperaturen). Wie eine solche Auswahl zu treffen ist, ist dem Fachmann auf dem Gebiet der Lackiertechnik bekannt und kann von diesem entsprechend angepasst werden. Möglich sind dabei die an sich bekannten EinKomponenten sowie Zwei-Komponenten-Beschichtungssysteme (vergleiche hierzu auch Römpp-Lexikon Lacke und Druckfarben, Georg Thieme Verlag, Stuttgart, New York, 1998, Seiten 274-276, sowie Seiten 641-642).

### Pigment (P)

Die erfindungsgemäße Beschichtungszusammensetzung enthält wenigstens ein Pigment (P) als weitere Komponente.

Der Begriff "Pigment" ist dem Fachmann bekannt, beispielsweise aus der DIN 55945 (Datum: Oktober 2001). Unter einem "Pigment" werden im Sinne der vorliegenden Erfindung vorzugsweise pulver- oder plättchenförmige Verbindungen verstanden, die in dem sie umgebenden Medium, wie beispielsweise in der erfindungsgemäßen Beschichtungszusammensetzung im Wesentlichen, vorzugsweise vollständig, unlöslich sind. Von "Füllstoffen" unterscheiden sich Pigmente vorzugsweise durch ihren Brechungsindex, der für Pigmente ≥1,7 beträgt.

Vorzugsweise ist ein solches Pigment ausgewählt aus der Gruppe bestehend aus organischen und anorganischen, farbgebenden und füllenden Pigmenten. Beispiele für geeignete anorganische farbgebende Pigmente sind Weißpigmente wie Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat. Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz. Die Pigmentierung umfasst vorzugsweise insbesondere üblicherweise Titandioxid, Eisenoxidpigment und Ruß.

Der Pigment-Gehalt an Pigment (P) in den erfindungsgemäßen Beschichtungszusammensetzungen kann variieren. Vorzugsweise liegt der Pigment-Gehalt, bezogen auf das Gesamtgewicht der erfindungsgemäßen Beschichtungszusammensetzung im Bereich von 0,1 bis 50 Gew.-%, bevorzugt im Bereich von 0,5 bis 45 Gew.-%, besonders bevorzugt im Bereich von 1,0 bis 40 Gew.-%, ganz besonders bevorzugt im Bereich von 2,0 bis 35 Gew.-% und insbesondere im Bereich von 3,0 bis 25 Gew.-%.

### Gegebenenfalls vorhandene weitere Komponente (Q)

Die erfindungsgemäße Beschichtungszusammensetzung kann je nach erwünschter Anwendung ein oder mehrere üblicherweise eingesetzte Komponenten, insbesondere Additive, als Komponente (Q) enthalten.

Vorzugsweise ist diese Komponente (Q) ausgewählt aus der Gruppe bestehend aus Antioxidantien, Antistatika, Netz- und Dispergiermitteln, Emulgatoren, Verlaufshilfsmitteln, Löslichkeitsvermittlern, Entschäumungsmitteln, Benetzungsmitteln, Stabilisierungsmitteln, vorzugsweise Hitze- und/oder Wäreme-Stabilisatoren, Prozess-Stabilisatoren und UV- und/oder Licht-Stabilisatoren, Flammschutzmitteln, Lichtschutzmitteln, Entlüftern, Inhibitoren wie Polymerisationsinhibitoren, Katalysatoren, Wachsen, Netz- und Dispergiermitteln, Flexibilisierungsmitteln, Flammschutzmitteln, Reaktivverdünnern, Rheologiehilfsmitteln, Trägermedien, Hydrophobierungsmitteln, Hydrophilierungsmitteln, Verdickern, Thixotropiermitteln, Schlagzähmachern, Blähmitteln, Prozesshilfsmitteln, Weichmachern, Füllstoffen, Glasfasern und Verstärkern, und Gemischen aus den vorstehend genannten weiteren Additiven. Der Gehalt an (Q) in der erfindungsgemäßen Beschichtungszusammensetzung kann variieren. Vorzugsweise liegt der Gehalt, bezogen auf das Gesamtgewicht der erfindungsgemäßen Beschichtungs-zusammensetzung bei 0,01 bis 20,0 Gew.-%, noch bevorzugter bei 0,05 bis 18,0 Gew.-%, besonders bevorzugt bei 0,1 bis 16,0 Gew.-%, ganz besonders bevorzugt bei 0,1 bis 14,0 Gew.-%, insbesondere bei 0,1 bis 12,0 Gew.-% und am meisten bevorzugt bei 0,1 bis 10,0 Gew.-%.

Der Begriff "Füllstoff" ist dem Fachmann bekannt, beispielsweise aus der DIN 55945 (Datum: Oktober 2001). Unter einem "Füllstoff" wird im Sinne der vorliegenden Erfindung vorzugsweise eine in der erfindungsgemäßen Beschichtungszusammensetzung im Wesentlichen, vorzugsweise vollständig, unlösliche Substanz verstanden, die insbesondere zur Vergrößerung des Volumens eingesetzt wird. Vorzugsweise unterscheiden sich "Füllstoffe" im Sinne der vorliegenden Erfindung von "Pigmenten" durch ihren Brechungsindex, der für Füllstoffe <1,7 beträgt. Jeder übliche dem Fachmann bekannte Füllstoff kann als Komponente (Q) eingesetzt werden. Beispiele geeigneter Füllstoffe sind Kaolin, Dolomit, Calcit, Kreide, Calciumsulfat, Bariumsulfat, Graphit, Silikate wie Magnesiumsilikate, insbesondere entsprechende Schichtsilikate wie Hectorit, Bentonit, Montmorillonit, Talk und/oder Glimmer, Kieselsäuren, insbesondere pyrogene Kieselsäuren, Hydroxide wie Aluminiumhydroxid oder Magnesiumhydroxid oder organische Füllstoffe wie Textilfasern, Cellulosefasern, Polyethylenfasern oder Polymerpulver; ergänzend wird auf Römpp Lexikon Lacke und Druckfarben, Georg Thieme Verlag, 1998, Seiten 250 ff., «Füllstoffe», verwiesen. Daneben werden üblicherweise Korrosionsinhibitoren wie beispielsweise Silicate, Orthophosphate und Polyphosphate eingesetzt. Es werden nur für spezielle Fälle farbige Füller hergestellt, die den geplanten Farbton für die Decklackierung unterstützen. Normalerweise haben die Füller verschiedene Grautöne, die durch Anteile an Pigmentrußen und Eisenoxiden (meistens Eisenoxidgelb) erzeugt werden.

Gegebenenfalls kann die erfindungsgemäße Beschichtungszusammensetzung als Komponente (Q) alternativ oder zusätzlich wenigstens ein von den in der erfindungsgemäßen Mischung enthaltenen Komponenten, insbesondere (M1) und (M2), verschiedenes Vernetzungsmittel (V) umfassen. Jedes übliche dem Fachmann bekannte Vernetzungsmittel kommt dabei in Betracht. Das Vernetzungsmittel (V) ist vorzugsweise zur thermischen Vernetzung bzw. Aushärtung geeignet. Beispiele geeigneter Vernetzungsmittel (V) sind Aminoplastharze, Polyamine, Phenoplaste, polyfunktionelle Mannich-Basen, Melaminharze wie insbesondere veretherte (alkylierte) Melamin-Formaldehyd-Kondensationsprodukte, Benzoguanamin-Harze, Anhydridgruppen enthaltende Verbindungen oder Harze, Epoxidgruppen enthaltende Verbindungen oder Harze, Tris(alkoxycarbonylamino)triazine, Carbonatgruppen enthaltende Verbindungen oder Harze, β-Hydroxyalkylamide sowie Verbindungen mit im Mittel mindestens zwei zur Umesterung befähigten Gruppen, beispielsweise Umsetzungsprodukte von Malonsäurediestern und Polyisocyanaten oder von Estern und Teilestern mehrwertiger Alkohole der Malonsäure mit Monoisocyanaten.

Vorzugsweise enthält die erfindungsgemäße Beschichtungszusammensetzung
das wenigstens eine polymere Harz (N) in einer Menge in einem Bereich von 10 bis 35 Gew.-%, bezogen auf das Gesamtgewicht der Beschichtungszusammensetzung, und
das wenigstens eine Pigment (P) in einer Menge in einem Bereich von 5 bis 40 Gew.-%, bezogen auf das Gesamtgewicht der Beschichtungszusammensetzung,
insbesondere wenn die erfindungsgemäße Beschichtungszusammensetzung die als Härter und Haftvermittler eingesetzte Mischung (M) in einer Menge in einem Bereich von 5 bis 25 Gew.-%, bezogen auf das Gesamtgewicht der Beschichtungszusammensetzung enthält,
wobei sich die Mengen der in der Beschichtungszusammensetzung enthaltenen Komponenten (M), (N) und (P) sowie gegebenenfalls wenigstens einer weiteren darin enthaltener Komponente (Q) und/oder gegebenenfalls darin enthaltener organischer Lösemittel auf insgesamt 100 Gew.-% addieren.

### Verfahren zur Herstellung der erfindungsgemäßen Beschichtungszusammensetzung

Ein weiterer Gegenstand der vorliegenden Erfindung ist ein Verfahren zur Herstellung der erfindungsgemäßen Beschichtungszusammensetzung. Das erfindungsgemäße Verfahren umfasst wenigstens den Schritt des Mischens der Komponenten (M) enthaltend (M1), (M2) und gegebenenfalls (M3), (N) und (P) und gegebenenfalls wenigstens einer weiteren Komponente (Q) und/oder gegebenenfalls wenigstens eines organischen Lösemittels.

Die Herstellung der erfindungsgemäßen Beschichtungszusammensetzung weist methodisch gesehen keine Besonderheiten auf, sondern erfolgt nach den üblichen und bekannten Methoden. Der Schritt des Mischens des erfindungsgemäßen Verfahrens wird vorzugsweise mittels eines Schnellrührers, Rührkessels oder Dissolvers wie zum Beispiel eines In-Line-Dissolvers durchgeführt.

### Verwendung der erfindungsgemäßen Beschichtungszusammensetzung

Ein weiterer Gegenstand der vorliegenden Erfindung ist eine Verwendung der erfindungsgemäßen Beschichtungszusammensetzung zur zumindest teilweisen Beschichtung eines gegebenenfalls zumindest teilweise wenigstens mit einer Grundierungsschicht beschichteten Substrats mit einer Füllerschicht.

Alle im Zusammenhang mit der erfindungsgemäßen Beschichtungszusammensetzung und der erfindungsgemäßen Mischung (M) hierin zuvor beschriebene bevorzugte Ausführungsformen sind auch bevorzugte Ausführungsformen der erfindungsgemäßen Beschichtungszusammensetzung hinsichtlich ihrer Verwendung zur zumindest teilweisen Beschichtung eines gegebenenfalls zumindest teilweise wenigstens mit einer Grundierungsschicht beschichteten Substrats mit einer Füllerschicht.

### Verfahren zur zumindest teilweisen Beschichtung eines gegebenenfalls zumindest teilweise wenigstens mit einer Grundierungsschicht beschichteten Substrats mit einer Füllerschicht

Ein weiterer Gegenstand der vorliegenden Erfindung ist ein Verfahren zur zumindest teilweisen Beschichtung eines gegebenenfalls zumindest teilweise wenigstens mit einer Grundierungsschicht beschichteten Substrats mit einer Füllerschicht umfassend wenigstens einen Schritt (1),
(1) zumindest teilweises Kontaktieren des Substrats mit der erfindungsgemäßen Beschichtungszusammensetzung.

Alle im Zusammenhang mit der erfindungsgemäßen Beschichtungszusammensetzung und der erfindungsgemäßen Mischung (M) hierin zuvor beschriebene bevorzugte Ausführungsformen sind auch bevorzugte Ausführungsformen der erfindungsgemäßen Beschichtungszusammensetzung hinsichtlich ihres Einsatzes in dem erfindungsgemäßen Verfahren zur zumindest teilweisen Beschichtung eines gegebenenfalls zumindest teilweise wenigstens mit einer Grundierungsschicht beschichteten Substrats mit einer Füllerschicht.

Die Applikation der erfindungsgemäßen Beschichtungszusammensetzung auf ein Substrat, d.h. das Kontaktieren gemäß Schritt (1), kann durch alle üblichen Applikationsmethoden, wie beispielsweise Spritzen, Rakeln, Streichen, Gießen, Tauchen, Tränken, Träufeln oder Walzen, vorzugsweise durch Spritzapplikation, erfolgen. Dabei kann das zu beschichtende Substrat als solches ruhen, wobei die Applikationseinrichtung oder -anlage bewegt wird. Indes kann auch das zu beschichtende Substrat bewegt werden, wobei die Applikationsanlage relativ zum Substrat ruht oder in geeigneter Weise bewegt wird. Vorzugsweise werden Spritzapplikationsmethoden angewandt, wie zum Beispiel Druckluftspritzen (pneumatische Applikation), Airless-Spritzen, Hochrotation, elektrostatischer Sprühauftrag (ESTA), gegebenenfalls verbunden mit Heißspritzapplikation wie zum Beispiel Hot-Air-Heißspritzen.

Die Applikation der erfindungsgemäßen Beschichtungszusammensetzung erfolgt in den üblichen und bekannten Schichtdicken, beispielsweise in Nassfilmschichtdicken von 10 bis 400 Mikrometer, vorzugsweise von 80 bis 250 Mikrometer. Die dabei resultierenden Trockenfilmschichtdicken nach der Härtung liegen dann beispielsweise im Bereich von 20 bis 100 Mikrometer, insbesondere von 40 bis 80 Mikrometer.

Ein weiterer Gegenstand der vorliegenden Erfindung ist eine Füllerschicht erhältlich nach dem erfindungsgemäßen Verfahren.

### Verfahren zur zumindest teilweisen Beschichtung eines Substrats mit einer Mehrschichtlackierung

Ein weiterer Gegenstand der vorliegenden Erfindung ist ein Verfahren zur zumindest teilweisen Beschichtung eines Substrats mit einer Mehrschichtlackierung umfassend wenigstens die Schritte
(0) gegebenenfalls zumindest teilweises Aufbringen einer Grundierungsschicht auf ein Substrat,
(1) zumindest teilweises Kontaktieren des gegebenenfalls zumindest teilweise gemäß Schritt (0) wenigstens mit einer Grundierungsschicht beschichteten Substrats mit der erfindungsgemäßen Beschichtungszusammensetzung zum zumindest teilweisem Aufbringen einer Füllerschicht auf das gegebenenfalls zumindest teilweise wenigstens mit einer Grundierungsschicht beschichtete Substrat,
(2) Aufbringen einer Basislackschicht auf die nach Schritt (1) aufgebrachte Füllerschicht, und
(3) Aufbringen einer Klarlackschicht auf die nach Schritt (2) aufgebrachte Basislackschicht.

Alle im Zusammenhang mit der erfindungsgemäßen Beschichtungszusammensetzung und der erfindungsgemäßen Mischung (M) hierin zuvor beschriebene bevorzugte Ausführungsformen sind auch bevorzugte Ausführungsformen der erfindungsgemäßen Beschichtungszusammensetzung hinsichtlich ihres Einsatzes in dem erfindungsgemäßen Verfahren zur zumindest teilweisen Beschichtung eines Substrats mit einer Mehrschichtlackierung.

Schritt (1) des Verfahrens entspricht dem Schritt (1) des erfindungsgemäßen Verfahrens zur zumindest teilweisen Beschichtung eines gegebenenfalls zumindest teilweise wenigstens mit einer Grundierungsschicht beschichteten Substrats mit einer Füllerschicht.

Schritt (0) ist optional und sieht ein zumindest teilweises Aufbringen einer Grundierungsschicht (Primer) auf ein Substrat vor. Die Applikation des Primers wird so durchgeführt, dass die Nassfilmschichtdicke im Bereich von etwa 25-70 µm, vorzugsweise im Bereich von 35-50 µm liegt. Damit liegen die resultierenden Trockenfilmschichtdicken im Bereich von 20-100 µm, vorzugsweise im Bereich von 40-80 µm.

Die eingesetzten Primer können aus Zweikomponentenmaterialien bestehen, die niedrigviskose Epoxidharze und Polyaminaddukte als Vernetzer enthalten. Primäre und sekundäre Amine reagieren bereits bei Raumtemperatur mit Epoxidgruppen, wodurch sekundäre beziehungsweise tertiäre Amine entstehen. Typischerweise werden aromatische Epoxidharze eingesetzt. Diese werden bevorzugt aus Bisphenol A und Epichlorhydrin hergestellt. Vorzugsweise wird ein entsprechendes Epoxidharz aus der Umsetzung von einem Äquivalent Bisphenol A mit zwei Äquivalenten Epichlorhydrin dargestellt. Daneben ist der Einsatz von höhermolekularen aromatischen Epoxidharzen bevorzugt. Diese werden üblicherweise durch Umsetzung von Bisphenol-A-diglycidylether mit unterschiedlichen Mengen an Bisphenol A hergestellt. Als Amine können Ethylendiamin, Propylendiamin, Diethylentriamin, Dipropylentriamin, Isophorondiamin und Bis-(4-amino-3-methylcyclohexyl)-methan eingesetzt werden. Darüber hinaus lassen sich aus Polyaminen auch oligomere Produkte erzeugen, die für die Vernetzung noch eine ausreichende Anzahl an freien Aminogruppen enthalten. Solche Aminaddukte bestehen üblicherweise aus einem Epoxidharz, welches mit einem Überschuss an Polyaminen umgesetzt wird; beispielsweise ein Addukt aus zwei Äquivalenten Diethylentriamin und einem Äquivalent Bisphenol-A-diglycidylether. Eine andere Gruppe von Vernetzern sind niedrigmolekulare Polyamide mit end- und seitentständigen freien primären oder sekundären Aminogruppen. Die Polyamide werden durch Umsetzung eines Überschusses der oben aufgezählten Amine mit polymeren Fettsäuren hergestellt. Geeignete Lösemittel sind Ester, Alkohole sowie aromatische Verbindungen. Bevorzugt sind die eingesetzten Primer chromatfrei. Als Korrosionsschutzpigmente enthalten sie bevorzugt Zinkphosphate. Daneben enthalten sie Titandioxid und Füllstoffe. Die eingesetzten Primer können zudem mit Ruß und/oder Eisenoxiden pigmentiert sein. Die eingesetzten Primer können auch aus Einkomponentenmaterialien bestehen, die Phenolharze und/oder Polyvinylbutyralharze und Harnstoff-Formaldehydharze, die gegebenenfalls verethert sind, als Vernetzer enthalten.

Nach optionalem Aufbringen der Primerschicht gemäß Schritt (0) und nach Aufbringen der Füllerschicht gemäß Schritt (1) werden die Primerschicht und die Füllerschicht vorzugsweise gemeinsam gehärtet. Die Härtung weist keine methodischen Besonderheiten auf, sondern erfolgt nach den üblichen und bekannten Methoden wie beispielsweise Erhitzen in einem Umluftofen. So kann die Härtung zum Beispiel im Bereich der Raumtemperatur (18 bis 23°C) oder auch bei erhöhten Temperaturen im Bereich von beispielsweise 40°C bis 100°C, bevorzugt von 50°C bis 90°C erfolgen. Beispielsweise kann die Härtung über einen Zeitraum von 5 bis 120 Minuten, bevorzugt 10 bis 40 Minuten, erfolgen. Der Härtung kann gegebenenfalls auch eine Ablüft- beziehungsweise Vortrocknungsphase vorausgehen, beispielsweise bei Raumtemperatur für eine Zeitdauer von 1 bis 60 Minuten.

Üblicherweise wird auf der gemäß Schritt (1) applizierten Füllerschicht eine weitere Schicht, insbesondere eine Basislackschicht gemäß Schritt (2) des erfindungsgemäßen Verfahrens aufgebracht. Die Applikation des Basislackes wird so durchgeführt, das die Nassfilmschichtdicke im Bereich von etwa 25-70µm, vorzugsweise im Bereich von 35-50µm liegt. Damit liegen die resultierenden Trockenfilmschichtdicken im Bereich von 10-25 µm, vorzugsweise im Bereich von 15-22µm.

Es können sowohl lösemittelbasierte, als auch wässrige Basislacke eingesetzt werden.

Die lösemittelbasierten Basislacke enthalten bevorzugt Celluloseacetobutyrat sowie Polyester- und/oder Polyacrylat- und Polymethacrylatharze (im Folgenden als Poly(meth)acrylatharze bezeichnet). Die Polyester- und oder Poly(meth)acrylatharze enthalten vorzugsweise zusätzlich unterschiedliche funktionelle Gruppen zur chemischen Vernetzung, wobei Hydroxygruppen bevorzugt sind. Als Vernetzer werden niedrigviskose aliphatische Polyisocyanataddukte eingesetzt, welche bereits in Zusammenhang mit der Beschreibung des erfindungsgemäßen lösemitttelbasierten Füllers diskutiert wurden. Ganz besonders bevorzugt werden hier ebenfalls Isocyanurattrimere des Hexamethylendiisocyanats eingesetzt. Als Lösemittel können all jene verwendet werden, welche oben bereits in Zusammenhang mit dem erfindungsgemäßen lösemittelbasierten Füller genannt worden sind.

Bevorzugt ist der Einsatz von wässrigen Basislacken. Wässrig ist eine dem Fachmann geläufige Spezifizierung von Beschichtungsmitteln, die als Lösemittel nicht ausschließlich organische Lösemittel enthalten, sondern auch auf Wasser als Lösemittel basieren. Wässrig bedeutet im Rahmen der vorliegenden Erfindung insbesondere, dass der Basislack vorzugsweise mindestens 20 Gew.-%, besonders bevorzugt mindestens 25 Gew.-% jeweils bezogen auf die Gesamtmenge des wässrigen Basislacks, enthält. Besonders bevorzugt ist wässrig so zu verstehen, dass neben der genannten Bedingungen "mindestens 20 Gew.-% (beziehungsweise mindestens 25 Gew.-%) Wasser, bezogen auf die Gesamtmenge des wässrigen Basislacks" als weitere Voraussetzung zu erfüllen ist, dass der Anteil organischer Lösemittel in dem Basislack kleiner als 10 Gew.-%, jeweils bezogen auf die Gesamtmenge des wässrigen Basislacks, ist. Des Weiteren kann der wässrige Basislack neben Wasser auch organische Lösemittel enthalten. Bevorzugt eingesetzt werden wassermischbare organische Lösemittel.

Als Bindemittel in wässrigen Basislacken dienen bevorzugt Polyurethan-, Polyester- und/oder Epoxidharze. Ebenfalls möglich ist der Einsatz von Poly(meth)acrylatharzen Die genannten organischen Polymere enthalten vorzugsweise zusätzlich unterschiedliche funktionelle Gruppen zur chemischen Vernetzung, wobei Hydroxygruppen bevorzugt sind. Die Dispergierbarkeit der organischen Polymere in Wasser kann über die dem Fachmann geläufigen Maßnahmen erreicht werden. Dabei kann es sich um die ionische Modifizierung der organischen Polymere durch Einführung von Monomeren, die beispielsweise Carboxylat- oder Sulfonatgruppen enthalten, handeln. Als Vernetzer werden bevorzugt Polyisocyanate eingesetzt. Bevorzugte Polyisocyanate sind all jene, welche bereits bei der Beschreibung des lösemittelbasierten Füllers offenbart wurden.

Daneben enthält der sowohl ein lösemittelbasierter als auch ein wässriger Basislack mindestens ein übliches und bekanntes farbgebendes und/oder effektgebendes Pigment. Beispiele für solche Pigmente sind Pigmente auf anorganischer Basis, wie beispielsweise Titandioxid, Eisenoxid und Ruß oder auch übliche Metallpigmente (beispielsweise handelsübliche Aluminiumbronzen, Edelstahlbronzen) und nichtmetallische Effektpigmente (beispielsweise Perlglanz- beziehungsweise Interferenzpigmente). Auch farbgebende Pigmente auf organischer Basis wie Azopigmente und Phthalocyaninpigmente können zum Einsatz kommen. Die Auswahl von Art und einzusetzender Menge von Pigmenten erfolgt in der dem Fachmann geläufigen Art und Weise und richtet sich nach den erforderlichen beziehungsweise gewünschten Eigenschaften des Beschichtungsmittels. Ergänzend sei hierzu auf Römpp-Lexikon Lacke und Druckfarben, Georg Thieme Verlag, Stuttgart, New York, 1998, Seiten 451, verwiesen.

Bevorzugt wird die Basislackschicht vor der vor der Applikation des Klarlacks gemäß Schritt (3) getrocknet. Unter dem Begriff "Trocknen" ist im Rahmen der vorliegenden Erfindung vorzugsweise das Entfernen von Lösungsmittel aus dem applizierten Lack zu verstehen. Je nach Beschaffenheit des Bindemittels kann es hier natürlich bereits zum Auftreten von Vernetzungsreaktionen führen. Die Vernetzung ist aber noch nicht vollständig. Das heißt, es entsteht hierbei keine ausgehärtete Lackschicht. Das Trocknen kann zunächst bei Raumtemperatur (20 bis 23°C) für 5 bis 30, bevorzugt 10 bis 20 Minuten und anschließend bei Temperaturen von 30 bis 90°C, insbesondere 50 bis 80 °C für ebenfalls 5 bis 30, bevorzugt 10 bis 20 Minuten erfolgen.

Schritt (3) des erfindungsgemäßen Verfahrens sieht das Aufbringen einer Klarlackschicht auf die nach Schritt (2) aufgebrachte Basislackschicht vor. Bekanntermaßen ist ein Klarlack ein Beschichtungsstoff, der nach Applikation und Härtung eine transparente Beschichtung (die Klarlackschicht) mit schützenden und/oder dekorativen Eigenschaften bildet. Unter schützenden Eigenschaften sind beispielsweise Kratzfestigkeit und Witterungsbeständigkeit, insbesondere UV-Beständigkeit, zu verstehen. Als dekorative Eigenschaft ist beispielsweise ein guter Glanz zu verstehen. Bei den einzusetzenden Klarlacken handelt es sich um die auf dem Gebiet der Kunststofflackierung üblich verwendeten Klarlacke, deren Auswahl und Einsatz dem Fachmann bekannt ist (vergleiche hierzu auch Römpp-Lexikon Lacke und Druckfarben, Georg Thieme Verlag, Stuttgart, New York, 1998, Seite 325). Die generellen Applikationsmethoden des Klarlacks entsprechen denen, wie sie weiter oben für den Basislack beschrieben wurden. Die Applikation des Klarlacks erfolgt in den üblichen und bekannten Schichtdicken, beispielsweise in Nassfilmschichtdicken von 10 bis 350 Mikrometer, vorzugsweise von 100 bis 150 Mikrometer. Die dabei resultierenden Trockenfilmschichtdicken nach der Härtung liegen dann beispielsweise im Bereich von 30 bis 70 Mikrometer, insbesondere 40 bis 60 Mikrometer.

Die Härtung von Basislack (aufgetragen gemäß Schritt (2)) und Klarlack (aufgetragen gemäß Schritt (3) erfolgt vorzugsweise gemeinsam. Diese weist keine methodischen Besonderheiten auf, sondern erfolgt nach den üblichen und bekannten Methoden wie beispielsweise Erhitzen in einem Umluftofen oder durch Bestrahlen mit IR-Lampen. Möglich ist auch die aktinische Härtung durch beispielsweise UV-Strahlung bei strahlenhärtenden Systemen. Die Härtungsbedingungen, insbesondere die Härtungstemperaturen, richten sich beispielsweise nach der Temperaturempfindlichkeit der verwendeten Substrate oder nach der Wahl der eingesetzten Bindemittel. So kann die Härtung zum Beispiel im Bereich der Raumtemperatur (20 bis 23°C) oder auch bei erhöhten Temperaturen im Bereich von beispielsweise 40°C bis 120°C, bevorzugt von 60°C bis 90°C erfolgen. Auch die Zeitdauer der Härtungsphase wird individuell gewählt und ist unter anderem abhängig von den schon genannten Faktoren (beispielsweise Wahl der Bindemittel und/oder der Härtungstemperaturen). Beispielsweise kann die Härtung über einen Zeitraum von 5 bis 120 Minuten, bevorzugt 10 Minuten bis 40 Minuten, erfolgen. Der Härtung kann gegebenenfalls auch eine Ablüft- beziehungsweise Vortrocknungsphase vorausgehen, beispielsweise bei Raumtemperatur für eine Zeitdauer von 1 bis 60 Minuten. Welche Härtungsbedingungen bei welchen Substraten und/oder Beschichtungszusammensetzungen anzuwenden sind, gehört zum allgemeinen Fachwissen auf dem Gebiet, sodass die Bedingungen vom Fachmann angepasst und ausgewählt werden können.

Ein weiterer Gegenstand der vorliegenden Erfindung ist eine Mehrschichtlackierung erhältlich nach dem erfindungsgemäßen Verfahren.

### Zumindest teilweise beschichtetes Substrat

Ein weiterer Gegenstand der vorliegenden Erfindung ist ein zumindest teilweise mit der erfindungsgemäßen Beschichtungszusammensetzung beschichtetes Substrat oder ein mittels eines der erfindungsgemäßen Verfahren erhältliches entsprechend beschichtetes Substrat. Das Substrat kann gegebenenfalls vor Aufbringen der Füllerschicht ein mit einem Primer, d.h. einer Grundierungsschicht beschichtetes Substrat sein.

### Bestimmungsmethoden

### 1. Bestimmung des nicht-flüchtigen Anteils:

Die Bestimmung des Festkörpergehalts (des nicht-flüchtigen Anteils) erfolgt gemäß DIN EN ISO 3251 (Datum: 1.6.2008). Dabei werden 1 g Probe in eine vorher getrocknete Aluminiumschale eingewogen und 60 Minuten bei 130 °C im Trockenschrank getrocknet, im Exsikkator abgekühlt, und dann zurückgewogen. Der Rückstand bezogen auf die Gesamtmenge der eingesetzten Probe entspricht dem Festkörpergehalt.

### 2. Bestimmung des zahlenmittleren und des gewichtsmittleren Molekulargewichts:

Die Bestimmung des zahlenmittleren (Mₙ) und des gewichtsmittleren Molekulargewichts (M_{w}) erfolgt mittels Gelpermeationschromatographie (GPC) mit Tetrahydrofuran als Elutionsmittel und unter Verwendung eines Polystyrol-Standards und ist angelehnt an DIN 55672-1 (Datum: August 2007). Als Säulenmaterial wird ein Styrol-Divinylbenzol-Copolymer eingesetzt. Mit dieser Methode kann zudem die Polydispersität (Verhältnis von gewichtsmittlerem Molekulargewicht (M_{w}) zu zahlenmittlerem Molekulargewicht (Mₙ)) bestimmt werden.

### 3. Bestimmung der Haftung

Die Haftung zwischen einer auf dem eingesetzten Substrat aufgetragenen Füllerschicht (erhältlich durch Aufbringen der erfindungsgemäßen Beschichtungszusammensetzung oder einer Vergleichsbeschichtungszusammensetzung auf ein gegebenenfalls mit einer Primerschicht beschichtetes Substrat) und dem Substrat selbst kann mittels der nachfolgend beschriebenen Methode bestimmt und bewertet werden.

Die Haftung bzw. die Haftfestigkeit wird dabei mittels der Gitterschnittprüfung gemäß DIN EN ISO 2409 (Datum: August 2007) ermittelt. Die Gitterschnittprüfung wird dabei entweder direkt nach Aufbringen der jeweiligen Beschichtung auf das Substrat oder nach einer Lagerung des beschichteten Substrats über eine Dauer von 16 Stunden bei 40°C nach Aufbringen der jeweiligen Beschichtung oder nach einer Lagerung des beschichteten Substrats unter Konstant-Klima-Bedingungen gemäß DIN EN ISO 6270-2 CH (Datum: September 2005) durchgeführt. Im letzteren Fall werden die zu untersuchenden beschichteten Substrate 10 Tage in der Klimakammer bei 100 % Luftfeuchtigkeit und 40 °C gelagert. Anschließend wird im letzteren Fall die Haftung der zu untersuchenden Proben 1 h, 3 h oder 24 h nach Entnahme aus der Klimakammer mittels der Gitterschnittprüfung untersucht. Die Bewertung der Haftung erfolgt dabei mittels eines Notensystems mit den Noten 0 bis 5, wobei die Note 0 für Beschichtungen vergeben wird, die nach der Gitterschnittprüfung keine sichtbaren Spuren aufweisen (sehr gute Haftung) und die Note 5 für Beschichtungen vergeben wird, die nach der Gitterschnittprüfung deutlich abgelöste Bereiche aufwiesen (ungenügende Haftung).

Die nachfolgenden Beispiele und Vergleichsbeispiele dienen der Erläuterung der Erfindung, sind jedoch nicht einschränkend auszulegen.

### Beispiele und Vergleichsbeispiele

Sofern nicht anders angeführt, handelt es sich bei den Angaben in Teilen um Gewichtsteile und bei Angaben in Prozenten jeweils um Gewichtsprozente.

### 1. Herstellung von Härter-Komponenten

### 1.1 Herstellung einer Härter-Komponente (B1a) (erfindungsgemäß)

Die in nachfolgender Tabelle 1.1 näher bezeichneten Edukte werden in den dort angegeben Verhältnissen zur Reaktion gebracht. Zunächst werden Xylol, n-Butylacetat (98-100%-ig), 1-Methoxy-2-propylacetat sowie Ethyl-3-ethoxypropionat vorgelegt und mit Desmodur® N3600, Desmodur® XP2565 und Bayhydur® 305 vermischt. Unter Rühren und Erhitzen unter Rückfluss wird unter Stickstoffatmosphäre die in Tabelle 1.1. genannte Menge an Dynasylan® 1124 so zugetropft, dass eine Temperatur im Bereich von 50-60°C nicht überschritten wird. Nach Beenden der Zugabe wird auf 18-23°C abgekühlt.

**Tabelle 1.1: Herstellung von (B1a)**

| **Position** | **Rohstoff** | **Menge [g]** |
|---|---|---|
| 1 | Xylol | 3,26 |
| 2 | n-Butylacetat | 25,75 |
| 3 | 1-Methoxy-2-propylacetat | 2,68 |
| 4 | Ethyl-3-ethoxypropionat | 1,06 |
| 5 | Desmodur® N3600 | 43,17 |
| 6 | Desmodur® XP2565 | 6,87 |
| 7 | Bayhydur® 305 | 6,23 |
| 8 | Dynasylan® 1124 | 8,01 |

Der Festkörpergehalt der so erhaltenen Härter-Komponente (B1a) beträgt 58,4 Gew.-%.

Bei Desmodur® N3600 handelt es sich um ein aliphatisches Polyisocyanat auf Basis von trimerisiertem HDI (Hexamethylendiisocyanat) der Firma Bayer mit einem Festkörpergehalt von 100 Gew.-% und einem NCO-Gehalt von ca. 23 Gew.-%. Bei Desmodur® XP2565 handelt es sich um ein aliphatisches Polyisocyanat auf Basis von IPDI (Isophorondiisocyanat) der Firma Bayer mit einem Festkörpergehalt von ca. 80 Gew.-% und einem NCO-Gehalt von ca. 12 Gew.-%. Bei Bayhydur® 305 handelt es sich um ein hydrophiles, Polyether-Einheiten aufweisendes aliphatisches Polyisocyanat auf Basis von HDI (Hexamethylendiisocyanat) der Firma Bayer mit einem Festkörpergehalt von 100 Gew.-% und einem NCO-Gehalt von ca. 16,2 Gew.-%. Bei Dynasylan® 1124 handelt es sich um sekundäres Amin, nämlich um Bis(trimethoxysilylpropyl)amin, der Firma Evonik.

Zur Herstellung der Härter-Komponente (B1a) werden als Isocyanat-Gruppen-haltige Edukte die kommerziell erhältlichen Produkte Desmodur® N3600, Desmodur® XP2565 und Bayhydur® 305 eingesetzt. Bezogen auf 100 Gewichtsteile dieser Isocyanat-Gruppen-haltigen Edukte werden somit 76,72 Gewichtsteile Desmodur® N3600, 12,21 Gewichtsteile Desmodur® XP2565 und 11,07 Gewichtsteile Bayhydur® 305 eingesetzt, wie in nachstehender Tabelle 1.2 verdeutlicht wird:

**Tabelle 1.2:**

| Zur Herstellung von B1a eingesetzte Isocyanat-Gruppenhaltige Edukte | Desmodur® N3600 | Desmodur® XP2565 | Bayhydur® 305 |
|---|---|---|---|
| Gewichtsteile | 76,72 | 12,21 | 11,07 |

### 1.2 Herstellung der Härter-Komponenten (B1b), (B1c), (B1d), (B1e) und (B1f) (erfindungsgemäß)

Die erfindungsgemäß eingesetzten Härter-Komponenten (B1b), (B1c), (B1d), (B1e) und (B1f) werden analog der zur Herstellung der Härter-Komponente (B1a) durchgeführten Vorgehensweise hergestellt, mit dem Unterschied, dass, bezogen auf 100 Gewichtsteile der Isocyanat-Gruppen-haltigen Edukte Desmodur® N3600, Desmodur® XP2565 und Bayhydur® 305, die jeweilige eingesetzte Stöchiometrie dieser Edukte zueinander, d.h. deren Gewichtsteile, wie in nachstehender Tabelle 1.3 angeführt, variiert wird.

**Tabelle 1.3:**

| *Zur Herstellung von (B1a), (B1b), (B1c), (B1d), (B1e) und (B1f) eingesetzte Isocyanat-Gruppen-haltige Edukte* | *Desmodur*® *N3600* | *Desmodur*® *XP2565* | *Bayhydur*® *305* |
|---|---|---|---|
| Gewichtsteile, eingesetzt zur Herstellung von (B1b) | 81,96 | 13,14 | 5,0 |
| Gewichtsteile, eingesetzt zur Herstellung von (B1c) | 80,66 | 11,84 | 7,5 |
| Gewichtsteile, eingesetzt zur Herstellung von (B1d) | 79,46 | 10,54 | 10,0 |
| Gewichtsteile, eingesetzt zur Herstellung von (B1a) (s. auch Tab. 1.1b) | 76,72 | 12,21 | 11,07 |
| Gewichtsteile, eingesetzt zur Herstellung von (B1e) | 78,21 | 9,29 | 12,5 |
| Gewichtsteile, eingesetzt zur Herstellung von (B1f) | 76,96 | 8,04 | 15,0 |

### 1.3 Herstellung einer Vergleichs-Härter-Komponente (V1)

Die Vergleichs-Härter-Komponente (V1) wird analog der für (B1a) beschriebenen Vorgehensweise hergestellt, mit dem Unterschied, dass als Isocyanat-Gruppen-haltige Edukte lediglich die kommerziell erhältlichen Produkte Desmodur® N3600 und Desmodur® XP2565 eingesetzt werden.

Die Vergleichs-Härter-Komponente (V1) weist somit zwar Silan-Gruppen auf, jedoch ist zu ihrer Herstellung nicht das Isocyanat-Gruppen-haltige Edukt Bayhydur® 305 eingesetzt worden.

### 1.4 Herstellung der Härter-Komponenten (B1d-1), (B1d-2), (B1d-3) und (B1d-4) (erfindungsgemäß)

Die Härter-Komponenten (B1d-1), (B1d-2), (B1d-3) und (B1d-4) werden analog der für (B1d) beschriebenen Vorgehensweise hergestellt, mit dem Unterschied, dass zu (B1d) zusätzlich 2,5 Gew.-% Glycidoxypropyltrimethoxysilan (GLYMO) (B1d-1), 5,0 Gew.-% GLYMO) (B1d-2), 7,5 Gew.-% GLYMO (B1d-3) oder 10 Gew.-% GLYMO (B1d-4) unter Rühren hinzugegeben werden (Laborrührer: 260-1820 rpm), jeweils bezogen auf das Gesamtgewicht von (B1d).

### 1.5 Herstellung einer Vergleichs-Härter-Komponente (V2)

Die in nachfolgender Tabelle 1.4 näher bezeichneten Edukte werden in den dort angegeben Verhältnissen zur Reaktion gebracht. Es werden Xylol, n-Butylacetat (98-100%-ig), 1-Methoxy-2-propylacetat sowie Ethyl-3-ethoxypropionat vorgelegt und mit Desmodur® N3600, Desmodur® XP2565 und Bayhydur® 305 vermischt.

**Tabelle 1.4: Herstellung von (V2)**

| **Position** | **Rohstoff** | **Menge [g]** |
|---|---|---|
| 1 | Xylol | 5,03 |
| 2 | n-Butylacetat | 39,71 |
| 3 | 1-Methoxy-2-propylacetat | 4,14 |
| 4 | Ethyl-3-ethoxypropionat | 1,64 |
| 5 | Desmodur® N3600 | 43,20 |
| 6 | Desmodur® XP2565 | 6,83 |
| 7 | Bayhydur® 305 | 6,23 |

Der Festkörpergehalt der so erhaltenen Vergleichs-Härter-Komponente (V2) beträgt 45,6 Gew.-%.

Die Vergleichs-Härter-Komponente (V2) weist keine Silan-Gruppen auf.

### 1.6 Herstellung von Härter-Komponenten (B2a), (B2b), (B2c) und (B2d) (erfindungsgemäß)

Die Härter-Komponenten (B2a), (B2b), (B2c) und (B2d) werden analog der für (V2) beschriebenen Vorgehensweise hergestellt, mit dem Unterschied, dass zu (V2) zusätzlich 2,5 Gew.-% Glycidoxypropyltrimethoxysilan (GLYMO) (B2a), 5,0 Gew.-% GLYMO) (B2b), 7,5 Gew.-% GLYMO (B2c) oder 10 Gew.-% GLYMO (B2d) unter Rühren hinzugegeben werden (Laborrührer: 260-1820 rpm), jeweils bezogen auf das Gesamtgewicht von (V2).

### 2. Herstellung von erfindungsgemäßen Beschichtungszusammensetzungen

Jeweils eine der erfindungsgemäß eingesetzten Härter-Komponenten (B1c), (B1d), (B1e), (B1d-1), (B1d-2), (B1d-3) und (B1d-4), (B2a), (B2b), (B2c) oder (B2d) oder eine der Vergleichs-Härter-Komponenten (V1) oder (V2) werden zur Herstellung von erfindungsgemäßen Beschichtungszusammensetzungen oder Vergleichsbeschichtungszusammensetzungen eingesetzt, welche jeweils zur Herstellung einer Füllerschicht auf einem Substrat geeignet sind.

Zur Herstellung jeder dieser Beschichtungszusammensetzungen wird jeweils sowohl eine Füller-Stammlack-Komponente als auch eine Verdünnungs-Komponente eingesetzt.

Die Zusammensetzung der Füller-Stammlack-Komponente ist in Tabelle 2.1 wiedergegeben. Die Zusammensetzung der Verdünnungs-Komponente ist in Tabelle 2.2 wiedergegeben.

Zur Herstellung der jeweiligen Beschichtungszusammensetzung werden Füller-Stammlack-Komponente, Verdünnungs-Komponente und jeweils eine erfindungsgemäß eingesetzte Härter-Komponente oder jeweils eine Vergleichs-Härter-Komponente V1 oder V2 in einem relativen Gewichtsverhältnis von 100:13,5:17,5 zueinander vermischt.

**Tab. 2.1: Füller-Stammlack-Komponente**

| **Füller-Stammlack-Komponente** | |
|---|---|
| Polyacrylat | 18,60 |
| Polyester | 2,36 |
| D.E.R. 671 | 2,20 |
| BYK® P 104 | 0,23 |
| Bentone® 34 | 0,50 |
| n-Butylacetat | 4,00 |
| Methoxypropylacetat | 7,30 |
| Aerosil® R972 | 1,45 |
| n-Butylacetat | 1,02 |
| Talkum | 8,97 |
| Kaolin | 14,90 |
| Zinkphosphat | 10,50 |
| Titandioxid | 9,96 |
| Bayferrox® 306 | 1,20 |
| Bariumsulfat | 8,95 |
| Additive | 0,30 |
| Butylacetat | 1,00 |
| Acrylat | 0,50 |
| n-Butylacetat | 0,50 |
| Katalysator | 0,99 |
| NC-Wolle (Lösung) | 2,50 |
| n-Butylacetat | 0,50 |
| n-Butylacetat | 0,61 |
| Nacure® 4167 | 1,00 |

Bei den jeweiligen Mengenangaben in Tabelle 2.1 handelt es sich um Gewichtsteile.

Als "Additive" wird eine Mischung eingesetzt, die 49,11 Gewichtsteile Xylol, 20,26 Gewichtsteile Ethylhexylacrylat, 5,06 Gewichtsteile Ethylacrylat, 0,15 Gewichtsteile tert.-Butyl-Peroxy-2-Ethylhexanoat und 25,42 Gewichtsteile Butylglykolacetat enthält. Als "Katalysator" wird eine Mischung eingesetzt, die 90 Gewichtsteile Xylol und 10 Gewichtsteile Tinstab® BL277, ein kommerziell erhältliches Produkt der Firma Akcros, enthält. D.E.R. 671 ist polymeres Epoxidharz der Firma Dow Chemicals. BYK® P 104 ist ein Netz- und Dispergiermittel der Firma Byk. Bentone® 34 ist ein Rhelogiehilfsmittel der Firma Elementis Specialties. Aerosil® R972 ist eine hydrophobierte pyrogene Kieselsäure der Firma Evonik. Bayferrox® 306 ist ein Eisenoxid-Schwarzpigment. NC-Wolle ist Nitrocellulose. Nacure® 4167 ist ein phosphorhaltiger Katalysator, der mit einem Amin blockiert ist und von der Firma King Industries vertrieben wird. Das eingesetzte Polyacrylat sowie der eingesetzte Polyester weisen jeweils funktionelle OH-Gruppen auf.

**Tab. 2.2: Verdünnungs-Komponente**

| **Verdünnungs-Komponente** | |
|---|---|
| n-Butylacetat | 50 |
| Xylol | 15 |
| Solventnaphtha 160/180 | 13 |
| Testbenzin 135/180 | 10 |
| Methoxypropylacetat | 6 |
| Butylglykolacetat | 3 |
| Ethyl-3-ethoxypropionat | 1 |
| Dipenten | 2 |

Bei den jeweiligen Mengenangaben in Tabelle 2.2 handelt es sich um Gewichtsteile.

Es werden auf diese Weise die folgenden erfindungsgemäßen Beschichtungszusammensetzungen und Vergleichsbeschichtungszusammensetzungen erhalten:
F1, enthaltend (B1c)
F2, enthaltend (B1d)
F3, enthaltend (B1e),
F4, enthaltend (B2a),
F5, enthaltend (B2b),
F6, enthaltend (B2c),
F7, enthaltend (B2d),
F8, enthaltend (B1d-1),
F9, enthaltend (B1d-2),
F10, enthaltend (B1d-3),
F11, enthaltend (B1d-4),
VF1, enthaltend (V1) und
VF2, enthaltend (V2).

### 3. Herstellung von beschichteten Substraten mittels einer der erfindungsgemäßen Beschichtungszusammensetzungen oder einer Vergleichsbeschichtungszusammensetzung

Als Substrate (S) werden Tafeln aus Stahl, jeweils in Form von Testplatten mit einer Größe von 10 x 20 x 0,45 cm eingesetzt. Diese Substrate werden zunächst geschliffen (P180er-Schliff) und danach mit einem Reinigungsmittel (SV99-0380) gereinigt.

Auf das so vorbehandelte Substrat wird zunächst mittels pneumatischer Spritzapplikation eine Primerschicht, d.h. eine Grundierungsschicht, in einer Nassfilmschichtdicke von 35-50 µm aufgetragen. Anschließend wird die so erhaltene Primerschicht bei 18-23°C getrocknet. Zur Herstellung der Primerschicht wird eine Primerbeschichtungszusammensetzung eingesetzt, welche hergestellt wird aus einer Primer-Stammlack-Komponente, einer Primer-Verdünnungs-Komponente und einer Glasurit-Komponente. Diese Komponenten werden in einem relativen Gewichtsverhältnis von 100:8:36 zueinander vermischt.

Die Zusammensetzungen der Primer-Verdünnungs-Komponente und der Glasurit-Komponente sind in Tabelle 3.1 bzw. 3.2 wiedergegeben.

**Tabelle 3.1:**

| **Verdünnungs-Komponente** | |
|---|---|
| Methoxypropylacetat | 46,5 |
| Butylacetat | 30,0 |
| Xylol | 20,0 |
| Butylglykolacetat Ethyl-3- | 2,0 |
| ethoxypropionat | 1,5 |

**Tabelle 3.2:**

| **Glasurit-Komponente** | |
|---|---|
| Ethanol | 27,0 |
| Isopropanol | 56,0 |
| n-Butanol | 13,0 |
| Phosphorsäure (85%) | 4,0 |

Bei den jeweiligen Mengenangaben in Tabelle 3.1 und 3.2 handelt es sich jeweils um Gewichtsteile.

Die Zusammensetzung der Primer-Stammlack-Komponente ist in Tabelle 3.3 wiedergegeben. Bei den Mengenangaben in Tabelle 3.3 handelt es sich jeweils um Gewichtsteile.

**Tabelle 3.3:**

| **Primer-Stammlack-Komponente** | |
|---|---|
| Mischung 1 | 24,70 |
| Parosin® PE 45.5 | 6,20 |
| Phenodur® PR263 Calcium-Naphthanat | 3,30 |
| (4%ig) | 0,50 |
| Kieselsäure | 0,65 |
| Titandioxid | 9,40 |
| Talkum | 8,00 |
| Zinkphosphat | 5,30 |
| Zinkoxid | 2,00 |
| Bayferrox® 415 | 3,70 |
| Ruß Flamm | 0,05 |
| n-Butylacetat | 2,00 |
| n-Butylacetat | 2,00 |
| Mischung 2 | 10,90 |
| Cellulose (Lösung) | 3,80 |
| n-Propanol | 9,40 |
| Plastopal® FIB | 0,50 |
| n-Butanol | 3,5 |

Bayferrox® 415 ist ein Eisenoxid-Gelbpigment. Plastopal® FIB ist ein mit Isobutanol verethertes Harnstoff-Formaldehydharz der Firma BASF. Phenodur® PR263 ist ein Phenolharz. Als Kieselsäure wird das Produkt HDK® T40 der Firma Wacker eingesetzt. Als "Mischung 1" wird eine Mischung aus 30 Gewichtsteilen n-Propanol, 10,3 Gewichtsteilen n-Butanol, 15,5 Gewichtsteilen Isobutanol, 30 Gewichtsteilen Xylol und 14,2 Gewichtsteilen Mowital® B30H, einem kommerziell erhältlichen Polyvinylbutyralharz der Firma Kuraray, eingesetzt. Als "Mischung 2" wird eine Mischung aus 84 Gewichtsteilen n-Propanol und 16 Gewichtsteilen Mowital® B60H, einem kommerziell erhältlichen Polyvinylbutyralharz der Firma Kuraray, eingesetzt.

Auf das so vorbehandelte und Primer-beschichtete Substrat wird mittels pneumatischer Spritzapplikation eine der erfindungsgemäße Beschichtungszusammensetzungen F1 bis F11 oder eine der Vergleichsbeschichtungszusammensetzungen FV1 oder FV2 als Füllerschicht mit einer Nassfilmschichtdicke von 120-180 µm appliziert. Die so applizierte jeweilige Füllerschicht wird für 10 Minuten bei Raumtemperatur (20-23°C) und anschließend für weitere 25 Minuten bei 60 °C im Umluftofen (Ofentemperatur) gehärtet.

Nach Abkühlen der so beschichteten Substrate auf 20-23°C werden diese mit einem Exzenterschleifer mit 400er Papier geschliffen und anschließend mit dem Reinigungsmittel SV20-0240 gereinigt.

Daraufhin wird eine handelsübliche Basislackschicht mittels pneumatischer Spritzapplikation in einer Nassfilmschichtdicke von 35-50 µm appliziert. Anschließend erfolgt die Trocknung des resultierenden Basislacks bei 20-23°C für die Dauer von 10 bis 15 Minuten. Zur Herstellung der Basislackschicht wird eine Basislackzusammensetzung eingesetzt, welche hergestellt wird aus einer Basislack-Stammlack-Komponente und einer Einstellzusatz-Komponente. Diese Komponenten werden in einem relativen Gewichtsverhältnis von 100:50 zueinander vermischt.

Daraufhin wird auf jedes der so erhaltenen mit einer Basislackschicht beschichteten Substrate ein üblicherweise eingesetzter lösemittel-basierter Klarlack appliziert. Zur Herstellung der Klarlackschicht wird eine Klarlackzusammensetzung eingesetzt, welche hergestellt wird aus einer Klarlack-Stammlack-Komponente, einer Verdünnungs-Komponente und einer Härter-Komponente. Diese Komponenten werden in einem relativen Gewichtsverhältnis von 100:8,6:50 zueinander vermischt.

Anschließend erfolgt die Trocknung des resultierenden Klarlacks für 10 Minuten bei 20-23°C und anschließend für 30 Minuten bei 60 °C im Umluftofen.

In dem jeweiligen resultierenden Substrat weist die Primerschicht eine Trockenfilmschichtdicke von 15-20 µm, die Füllerschicht eine Trockenfilmschichtdicke von 50-70 µm, die Basislackschicht eine Trockenfilmschichtdicke von 18-20 µm und die Klarlackschicht eine Trockenfilmschichtdicke von ca. 50 µm auf.

Es werden so die folgenden beschichteten Substrate erhalten: S-F1, S-F2, S-F3, S-F4, S-F5, S-F6, S-F7, S-F8, S-F9, S-F10, S-F11, S-VF1 und S-VF2.

Von jedem der unterschiedlichen beschichteten Substrate werden insgesamt 3 Proben hergestellt und jede Probe wie nachfolgend unter Punkt **4.** beschrieben jeweils einzeln untersucht. Anschließend wird der jeweilige Mittelwert gebildet.

### 4. Untersuchung der Haftungseigenschaften der beschichteten Substrate

**4.1** Die Haftung zwischen einer Füllerschicht, erhältlich durch Aufbringen der erfindungsgemäßen Beschichtungszusammensetzung oder einer Vergleichsbeschichtungszusammensetzung auf ein mit einer Primerschicht beschichtetes Substrat und dem mit einer Primerschicht beschichteten Substrat selbst wird mittels der vorstehend beschriebenen Methode bestimmt und bewertet.

In Tabelle 4 und 5 sind die Ergebnisse zusammengefasst:
Wie aus den Tabellen 4 und 5 ersichtlich ist, lässt sich durch Einsatz der erfindungsgemäßen Härter-Komponente in der zur Herstellung einer Füllerschicht eingesetzten Beschichtungszusammensetzung eine signifikante Verbesserung der Haftung zum jeweiligen grundierten Substrat (S) erzielen.

**Tabelle 4:**

| **Beschichtetes Substrat** | **Haftung¹** | **Haftung²** | **Haftung³** |
|---|---|---|---|
| S-VF1 (Vergleich) | 2 | 5 | 5 |
| S-F1 | **0** | **0** | **0,5** |
| S-F2 | **1** | **0** | **2** |
| S-F3 | **0** | **1,5** | **0,5** |
| S-F8 | **1,5** | **1,5** | **2** |
| S-F9 | **1** | **0,5** | **0,5** |
| S-F10 | **0** | **1** | **1** |
| S-F11 | **0** | **0,5** | **0,5** |

| | | | |
|---|---|---|---|
| ¹Bewertung der Haftung zwischen Füllerschicht und grundiertem Substrat mittels Gitterschnittprüfung nach Lagerung über eine Dauer von 16 Stunden bei 40°C ²Bewertung der Haftung zwischen Füllerschicht und grundiertem Substrat mittels Gitterschnittprüfung nach 1 h nach Lagerung über 10 Tage unter Konstant-Klima-Bedingungen ³Bewertung der Haftung zwischen Füllerschicht und grundiertem Substrat mittels Gitterschnittprüfung nach 3 h nach Lagerung über 10 Tage unter Konstant-Klima-Bedingungen | | | |

Wie aus Tabelle 4 ersichtlich ist, lässt sich durch Einsatz der erfindungsgemäßen Härter-Komponenten in der zur Herstellung einer Füllerschicht eingesetzten Beschichtungszusammensetzung eine signifikante Verbesserung der Haftung zum jeweiligen Substrat S erzielen. Dabei ist in F1 bis F3 das einer Teilsilanisierung unterworfene kommerziell erhältliche, Polyether-Einheiten aufweisende Produkt Bayhydur® 305 vorhanden. In F8 bis F11 ist zusätzlich mit GLYMO eine weitere Silan-Gruppen aufweisende Verbindung vorhanden. Wie ein Vergleich mit VF1 zeigt ist die Gegenwart von Bayhydur® 305 notwendig, um eine ausreichende Haftung zu erzielen: nur der Einsatz der einer Teilsilanisierung unterworfenen kommerziell erhältlichen Produkte Desmodur® XP 2565 und Desmodur® N 3600 (ohne Bayhydur® 305) ist hierfür nicht ausreichend.

**Tabelle 5:**

| **Beschichtetes Substrat** | **Haftung¹** | **Haftung²** |
|---|---|---|
| S-VF2 (Vergleich) | 2,5 | 3 |
| S-F4 | **1** | **1** |
| S-F6 | **0,5** | **0** |
| S-F7 | **0** | **0** |

| | | |
|---|---|---|
| ¹Bewertung der Haftung zwischen Füllerschicht und grundiertem Substrat mittels Gitterschnittprüfung nach 1 h nach Lagerung über 10 Tage unter Konstant-Klima-Bedingungen ²Bewertung der Haftung zwischen Füllerschicht und grundiertem Substrat mittels Gitterschnittprüfung nach 24 h nach Lagerung über 10 Tage unter Konstant-Klima-Bedingungen | | |

Wie aus Tabelle 5 ersichtlich ist, lässt sich durch Einsatz der erfindungsgemäßen Härter-Komponenten in der zur Herstellung einer Füllerschicht eingesetzten Beschichtungszusammensetzung eine signifikante Verbesserung der Haftung zum jeweiligen Substrat S erzielen. Dabei ist in F4, F-6 und F7 zum einen das kommerziell erhältliche, Polyether-Einheiten aufweisende Produkt Bayhydur® 305 in Kombination mit GLYMO als eine Silan-Gruppen aufweisende Verbindung vorhanden. Wie ein Vergleich mit VF2 zeigt ist die Gegenwart von GLYMO notwendig, um eine ausreichende Haftung zu erzielen: nur der Einsatz der kommerziell erhältlichen Produkte Desmodur® XP 2565 und Desmodur® N 3600 und Bayhydur® 305 ohne eine zuvor durchgeführte Teilsilanisierung bzw. der Zugabe einer Silan-Gruppen aufweisenden Verbindung wie GLYMO ist hierfür nicht ausreichend.

## Patentansprüche

1. Eine als Härter und als Haftvermittler einsetzbare Mischung (M) enthaltend wenigstens zwei voneinander verschiedene, jeweils unabhängig voneinander freie und/oder blockierte Isocyanat-Gruppen aufweisende Komponenten (M1) und (M2) sowie gegebenenfalls eine weitere von (M1) und (M2) verschiedene Komponente (M3),
wobei die Komponente (M1) wenigstens ein aliphatisches Polyisocyanat umfasst, und
die Komponente (M2) wenigstens ein aliphatisches, Polyether-Einheiten aufweisendes Polyisocyanat umfasst,
**dadurch gekennzeichnet, dass**
das relative Gewichtsverhältnis der Komponenten (M1) zu (M2) in der Mischung (M) zueinander in einem Bereich von 25:1 bis 3:1 liegt, jeweils bezogen auf den Festkörpergehalt der Komponenten (M1) und (M2), und
wenigstens eine der in der Mischung (M) enthaltenen Komponenten (M1), (M2) und gegebenenfalls (M3) hydrolysierbare Silan-Gruppen aufweist.

2. Die Mischung gemäß Anspruch 1, **dadurch gekennzeichnet, dass** das relative Gewichtsverhältnis der Komponenten (M1) zu (M2) in der Mischung (M) zueinander in einem Bereich von 20:1 bis 5:1 liegt, jeweils bezogen auf den Festkörpergehalt der Komponenten (M1) und (M2).

3. Die Mischung gemäß Anspruch 1 oder 2, **dadurch gekennzeichnet, dass** die Mischung (M) wenigstens 5 Gew.-% der Komponente (M2) enthält, bezogen auf den gesamten Festkörpergehalt der Mischung (M).

4. Die Mischung gemäß einem der vorstehenden Ansprüche, **dadurch gekennzeichnet, dass**
(i) die in der Mischung (M) enthaltenen Komponenten (M1) und (M2) jeweils hydrolysierbare Silan-Gruppen aufweisen oder
(ii) die in der Mischung (M) enthaltenen Komponenten (M1) und (M2) jeweils keine hydrolysierbare Silan-Gruppen aufweisen, sondern die Mischung (M) neben den Komponenten (M1) und (M2) die wenigstens eine weitere Komponente (M3) enthält, welche hydrolysierbare Silan-Gruppen aufweist.

5. Die Mischung gemäß einem der vorstehenden Ansprüche, **dadurch gekennzeichnet, dass**
(i) die Mischung (M) erhältlich ist durch Mischen der Komponenten (M1) und (M2) und teilweiser Umsetzung der Isocyanat-Gruppen der Komponenten (M1) und (M2) mit wenigstens einer hydrolysierbaren Silan-Verbindung, welche wenigstens eine gegenüber Isocyanat-Gruppen reaktive funktionelle Gruppe aufweist, oder
(ii) die Mischung (M) erhältlich ist durch Mischen der Komponenten (M1) und (M2) und Zugabe wenigstens einer hydrolysierbaren Silan-Verbindung als Komponente (M3) zu den Komponenten (M1) und (M2).

6. Die Mischung gemäß einem der vorstehenden Ansprüche, **dadurch gekennzeichnet, dass** die Mischung (M) eine lösemittelhaltige Dispersion wenigstens der Komponenten (M1) und (M2) sowie gegebenenfalls (M3) ist.

7. Eine Verwendung der Mischung (M) gemäß einem der vorstehenden Ansprüche als Härter und als Haftvermittler in einer Beschichtungszusammensetzung, die zur zumindest teilweisen Beschichtung eines gegebenenfalls zumindest teilweise wenigstens mit einer Grundierungsschicht beschichteten Substrats mit einer Füllerschicht geeignet ist.

8. Eine Beschichtungszusammensetzung umfassend
wenigstens eine als Härter und als Haftvermittler einsetzbare Mischung (M) gemäß einem der Ansprüche 1 bis 6,
wenigstens ein von den Komponenten (M1) und (M2) sowie gegebenenfalls (M3) der Mischung (M) verschiedenes polymeres Harz (N) und
wenigstens ein Pigment (P)
zur zumindest teilweisen Beschichtung eines gegebenenfalls zumindest teilweise wenigstens mit einer Grundierungsschicht beschichteten Substrats mit einer Füllerschicht.

9. Die Beschichtungszusammensetzung gemäß Anspruch 8, **dadurch gekennzeichnet, dass** die Beschichtungszusammensetzung die als Härter und Haftvermittler eingesetzte Mischung (M) in einer Menge in einem Bereich von 5 bis 25 Gew.-%, bezogen auf das Gesamtgewicht der Beschichtungszusammensetzung, enthält.

10. Die Beschichtungszusammensetzung gemäß Anspruch 8 oder 9, **dadurch gekennzeichnet, dass** das polymere Harz (N) ausgewählt ist aus der Gruppe bestehend aus Polyurethanen, Polyestern, Epoxidharzen und Poly(meth)acrylaten, entsprechenden Copolymeren dieser Polymere sowie Mischungen davon.

11. Die Beschichtungszusammensetzung gemäß einem der Ansprüche 8 bis 10, **dadurch gekennzeichnet, dass** die Beschichtungszusammensetzung
das wenigstens eine polymere Harz (N) in einer Menge in einem Bereich von 10 bis 35 Gew.-%, bezogen auf das Gesamtgewicht der Beschichtungszusammensetzung, und
das wenigstens eine Pigment (P) in einer Menge in einem Bereich von 5 bis 40 Gew.-%, bezogen auf das Gesamtgewicht der Beschichtungszusammensetzung, enthält,
wobei sich die Mengen der in der Beschichtungszusammensetzung enthaltenen Komponenten (M), (N) und (P) sowie gegebenenfalls wenigstens einer weiteren darin enthaltener Komponente (Q) und/oder gegebenenfalls darin enthaltener organischer Lösemittel auf insgesamt 100 Gew.-% addieren.

12. Ein Verfahren zur zumindest teilweisen Beschichtung eines gegebenenfalls zumindest teilweise wenigstens mit einer Grundierungsschicht beschichteten Substrats mit einer Füllerschicht umfassend wenigstens einen Schritt (1),
(1) zumindest teilweises Kontaktieren des Substrats mit der Beschichtungszusammensetzung gemäß einem der Ansprüche 8 bis 11.

13. Ein Verfahren zur zumindest teilweisen Beschichtung eines Substrats mit einer Mehrschichtlackierung umfassend wenigstens die Schritte
(0) gegebenenfalls zumindest teilweises Aufbringen einer Grundierungsschicht auf ein Substrat,
(1) zumindest teilweises Kontaktieren des gegebenenfalls zumindest teilweise gemäß Schritt (0) wenigstens mit einer Grundierungsschicht beschichteten Substrats mit der Beschichtungszusammensetzung gemäß einem der Ansprüche 8 bis 11 zum zumindest teilweisem Aufbringen einer Füllerschicht auf das gegebenenfalls zumindest teilweise wenigstens mit einer Grundierungsschicht beschichtete Substrat,
(2) Aufbringen einer Basislackschicht auf die nach Schritt (1) aufgebrachte Füllerschicht, und
(3) Aufbringen einer Klarlackschicht auf die nach Schritt (2) aufgebrachte Basislackschicht.

14. Eine Füllerschicht erhältlich nach dem Verfahren gemäß Anspruch 12 oder eine Mehrschichtlackierung erhältlich nach dem Verfahren gemäß Anspruch 13.

15. Ein zumindest teilweise wenigstens mit der Beschichtungszusammensetzung gemäß einem der Ansprüche 8 bis 11 oder mittels des Verfahrens gemäß Anspruch 12 oder 13 beschichtetes Substrat.

## Claims

1. A mixture (M) which can be used as curing agent and as adhesion promoter and which comprises at least two components (M1) and (M2), which are different from one another and have in each case independently of one another free and/or blocked isocyanate groups, and which optionally comprises a further component (M3) different from (M1) and (M2);
component (M1) comprises at least one aliphatic polyisocyanate, and
component (M2) comprises at least one aliphatic polyisocyanate having polyether units,
**characterized in that**
the relative weight ratio of components (M1) and (M2) in the mixture (M) to one another is in a range from 25:1 to 3:1, based in each case on the solids content of components (M1) and (M2), and
at least one of the components (M1), (M2), and optionally (M3) present in the mixture (M) has hydrolyzable silane groups.

2. The mixture according to Claim 1, **characterized in that** the relative weight ratio of components (M1) and (M2) in the mixture (M) to one another is in a range from 20:1 to 5:1, based in each case on the solids content of components (M1) and (M2).

3. The mixture according to Claim 1 or 2, **characterized in that** the mixture (M) contains at least 5 wt% of component (M2), based on the total solids content of the mixture (M).

4. The mixture according to any of the preceding claims, **characterized in that**
(i) the components (M1) and (M2) present in the mixture (M) each have hydrolyzable silane groups or
(ii) the components (M1) and (M2) present in the mixture (M) each have no hydrolyzable silane groups, the mixture (M) instead including, in addition to components (M1) and (M2), the at least one further component (M3) which has hydrolyzable silane groups.

5. The mixture according to any of the preceding claims, **characterized in that**
(i) the mixture (M) is obtainable by mixing components (M1) and (M2) and partly reacting the isocyanate groups of components (M1) and (M2) with at least one hydrolyzable silane compound which has at least one functional group that is reactive toward isocyanate groups, or
(ii) the mixture (M) is obtainable by mixing components (M1) and (M2) and adding at least one hydrolyzable silane compound as component (M3) to components (M1) and (M2).

6. The mixture according to any of the preceding claims, **characterized in that** the mixture (M) is a solvent-containing dispersion at least of components (M1) and (M2) and also optionally (M3).

7. A use of the mixture (M) according to any of the preceding claims as curing agent and as adhesion promoter in a coating composition which is suitable for at least partly coating a substrate, optionally at least partly coated at least with a primer coat, with a surfacer coat.

8. A coating composition comprising
at least one mixture (M) according to any of Claims 1 to 6, which can be used as curing agent and as adhesion promoter,
at least one polymeric resin (N), different from components (M1) and (M2) and also, optionally, (M3) of the mixture (M), and
at least one pigment (P)
for at least partly coating a substrate, optionally coated at least partly at least with a primer coat, with a surfacer coat.

9. The coating composition according to Claim 8, **characterized in that** the coating composition comprises the mixture (M) which is used as curing agent and adhesion promoter in an amount in a range from 5 to 25 wt%, based on the total weight of the coating composition.

10. The coating composition according to Claim 8 or 9, **characterized in that** the polymeric resin (N) is selected from the group consisting of polyurethanes, polyesters, epoxy resins, and poly(meth)acrylates, corresponding copolymers of these polymers, and mixtures thereof.

11. The coating composition according to any of Claims 8 to 10, **characterized in that** the coating composition
comprises the at least one polymeric resin (N) in an amount in a range from 10 to 35 wt%, based on the total weight of the coating composition, and
comprises the at least one pigment (P) in an amount in a range from 5 to 40 wt%, based on the total weight of the coating composition;
the amounts of the components (M), (N), and (P) present in the coating composition, and also optionally at least one further component (Q) present therein, and/or optionally organic solvents present therein, add up in total to 100 wt%.

12. A method for at least partly coating a substrate, optionally at least partly coated at least with a primer coat, with a surfacer coat, comprising at least one step (1) of
(1) at least partly contacting the substrate with the coating composition according to any of Claims 8 to 11.

13. A method for at least partly coating a substrate with a multicoat paint system, comprising at least the steps of
(0) optionally at least partly applying a primer coat to a substrate,
(1) at least partly contacting the substrate optionally at least partly coated at least with a primer coat in step (0) with the coating composition according to any of Claims 8 to 11, for at least partly applying a surfacer coat to the substrate optionally coated at least partly at least with a primer coat,
(2) applying a basecoat film to the surfacer coat applied by step (1), and
(3) applying a clearcoat film to the basecoat film applied by step (2).

14. A surfacer coat obtainable by the method according to Claim 12, or a multicoat paint system obtainable by the method according to Claim 13.

15. A substrate at least partly coated at least with the coating composition according to any of Claims 8 to 11 or by means of the method according to Claim 12 or 13.

## Revendications

1. Mélange (M) utilisable en tant que durcisseur et en tant que promoteur d'adhésion, contenant au moins deux composants (M1) et (M2) différents l'un de l'autre, comprenant chacun indépendamment l'un de l'autre des groupes isocyanate libres et/ou bloqués, ainsi qu'éventuellement un autre composant (M3) différent de (M1) et (M2),
le composant (M1) comprenant au moins un polyisocyanate aliphatique, et
le composant (M2) comprenant au moins un polyisocyanate aliphatique comprenant des unités polyéther,
**caractérisé en ce que**
le rapport de mélange relatif entre les composants (M1) et (M2) dans le mélange (M) se situe dans une plage allant de 25:1 à 3:1, à chaque fois en termes de teneur en solides des composants (M1) et (M2), et
au moins un des composants (M1), (M2) et éventuellement (M3) contenus dans le mélange (M) comprend des groupes silane hydrolysables.

2. Mélange selon la revendication 1, **caractérisé en ce que** le rapport en poids relatif entre les composants (M1) et (M2) dans le mélange (M) se situe dans une plage allant de 20:1 à 5:1, à chaque fois en termes de teneur en solides des composants (M1) et (M2).

3. Mélange selon la revendication 1 ou 2, **caractérisé en ce que** le mélange (M) contient au moins 5 % en poids du composant (M2), par rapport à la teneur en solides totale du mélange (M).

4. Mélange selon l'une quelconque des revendications précédentes, **caractérisé en ce que**
(i) les composants (M1) et (M2) contenus dans le mélange (M) comprennent chacun des groupes silane hydrolysables, ou
(ii) les composants (M1) et (M2) contenus dans le mélange (M) ne comprennent ni l'un ni l'autre des groupes silane hydrolysables, et le mélange (M) contient plutôt en plus des composants (M1) et (M2) l'au moins un composant (M3) supplémentaire, qui comprend des groupes silane hydrolysables.

5. Mélange selon l'une quelconque des revendications précédentes, **caractérisé en ce que**
(i) le mélange (M) peut être obtenu par mélange des composants (M1) et (M2) et réaction partielle des groupes isocyanate des composants (M1) et (M2) avec au moins un composé de silane hydrolysable, qui comprend au moins un groupe fonctionnel réactif avec les groupes isocyanate, ou
(ii) le mélange (M) peut être obtenu par mélange des composants (M1) et (M2) et ajout d'au moins un composé de silane hydrolysable en tant que composant (M3) aux composants (M1) et (M2).

6. Mélange selon l'une quelconque des revendications précédentes, **caractérisé en ce que** le mélange (M) est une dispersion contenant un solvant d'au moins les composants (M1) et (M2), ainsi qu'éventuellement (M3).

7. Utilisation du mélange (M) selon l'une quelconque des revendications précédentes en tant que durcisseur et en tant que promoteur d'adhésion dans une composition de revêtement, qui est appropriée pour le revêtement au moins partiel d'un substrat éventuellement au moins partiellement revêtu avec au moins une couche de primaire avec une couche de remplissage.

8. Composition de revêtement, comprenant :
au moins un mélange (M) utilisable en tant que durcisseur et en tant que promoteur d'adhésion selon l'une quelconque des revendications 1 à 6,
au moins une résine polymère (N) différente des composants (M1) et (M2) et éventuellement (M3) du mélange (M), et
au moins un pigment (P),
pour le revêtement au moins partiel d'un substrat éventuellement au moins partiellement revêtu avec au moins une couche de primaire avec une couche de remplissage.

9. Composition de revêtement selon la revendication 8, **caractérisée en ce que** la composition de revêtement contient le mélange (M) utilisé en tant que durcisseur et en tant que promoteur d'adhésion en une quantité dans une plage allant de 5 à 25 % en poids, par rapport au poids total de la composition de revêtement.

10. Composition de revêtement selon la revendication 8 ou 9, **caractérisée en ce que** la résine polymère (N) est choisie dans le groupe constitué par les polyuréthanes, les polyesters, les résines époxyde et les poly(méth)acrylates, les copolymères correspondants de ces polymères et leurs mélanges.

11. Composition de revêtement selon l'une quelconque des revendications 8 à 10, **caractérisée en ce que** la composition de revêtement contient
l'au moins une résine polymère (N) en une quantité dans une plage allant de 10 à 35 % en poids, par rapport au poids total de la composition de revêtement, et
l'au moins un pigment (P) en une quantité dans une plage allant de 5 à 40 % en poids, par rapport au poids total de la composition de revêtement,
la somme des quantités des composants (M), (N) et (P) contenus dans la composition de revêtement et éventuellement d'au moins un composant (Q) supplémentaire contenu dans celle-ci et/ou éventuellement de solvants organiques contenus dans celle-ci étant au total de 100 % en poids.

12. Procédé de revêtement au moins partiel d'un substrat éventuellement au moins partiellement revêtu avec au moins une couche de primaire avec une couche de remplissage, comprenant au moins une étape (1) :
(1) la mise en contact au moins partielle du substrat avec la composition de revêtement selon l'une quelconque des revendications 8 à 11.

13. Procédé de revêtement au moins partiel d'un substrat avec un vernissage multicouche, comprenant au moins les étapes suivantes :
(0) éventuellement l'application au moins partielle d'une couche de primaire sur un substrat,
(1) la mise en contact au moins partielle du substrat éventuellement au moins partiellement revêtu selon l'étape (0) avec au moins une couche de primaire avec la composition de revêtement selon l'une quelconque des revendications 8 à 11 pour l'application au moins partielle d'une couche de remplissage sur le substrat éventuellement au moins partiellement revêtu avec au moins une couche de primaire,
(2) l'application d'une couche de vernis de base sur la couche de remplissage appliquée selon l'étape (1), et
(3) l'application d'une couche de vernis transparent sur la couche de vernis de base appliquée selon l'étape (2).

14. Couche de remplissage pouvant être obtenue par le procédé selon la revendication 12 ou vernissage multicouche pouvant être obtenu par le procédé selon la revendication 13.

15. Substrat au moins partiellement revêtu avec au moins la composition de revêtement selon l'une quelconque des revendications 8 à 11 ou au moyen du procédé selon la revendication 12 ou 13.
